# EUROPEAN PATENT SPECIFICATION

(11) **EP 4 462 713 B1**
(45) Date of publication and mention of the grant of the patent: **11.11.2026**
(21) Application number: 23737178.6
(22) Date of filing: 06.01.2023
(51) Int. Cl.: H04L 5/00, H04L 27/26

(54) **PORT MAPPING METHOD FOR SOUNDING REFERENCE SIGNAL, AND TERMINAL**
PORTABBILDUNGSVERFAHREN FÜR KLANGREFERENZSIGNAL UND ENDGERÄT
PROCÉDÉ DE MAPPAGE DE PORTS DE SIGNAL DE RÉFÉRENCE DE SONDAGE, ET TERMINAL

(30) Priority: 07.01.2022 CN 202210016659
(43) Date of publication of application: 13.11.2024
(73) Proprietor: VIVO MOBILE COMMUNICATION CO., LTD., Dongguan, Guangdong 523863 (CN)
(72) Inventor: ZHENG, Kaili, Dongguan, Guangdong 523863 (CN); SHI, Yuan, Dongguan, Guangdong 523863 (CN); RAKESH, Tamrakar, Dongguan, Guangdong 523863 (CN)
(74) Representative: Murgitroyd & Company
(86) International application number: PCT/CN2023/071093
(87) International publication number: WO 2023/131316

(56) References cited:
- WO-A1-2018/126987
- WO-A1-2018/127171
- WO-A1-2021/027513
- WO-A2-2021/207746
- CN-A- 109 391 395
- CN-A- 110 168 954
- CN-A- 111 835 488
- US-A1- 2021 112 498
- US-A1- 2021 112 498
- US-A1- 2022 166 583

## Description

### TECHNICAL FIELD

This application pertains to the field of communications technologies, and in particular, relates to a port mapping method for sounding reference signals, a terminal and a readable storage medium.

### BACKGROUND

In an NR system, sounding reference signals (Sounding Reference Signal, SRS) can be used for beam management (beam management), codebook (codebook)-based transmission, non-codebook (non-codebook)-based transmission, and antenna switching (antenna switching) transmission. A terminal can obtain a plurality of SRS resource sets through higher-layer signaling, and configuration for each SRS resource set includes configurations of its usage, periodic characteristics, or the like.

In Release-15/16, SRS resources can occupy the last 6 symbols in one slot, and configuration can be made through higher-layer signaling to occupy 1/2/4 symbol for SRS transmission, and supports a comb-like structure such as comb-2 and comb-4 in frequency domain. Release-17 is enhanced on the basis of Release-15/16. In one slot, a starting symbol position of SRS resources may be any symbol in one slot. A comb-8 structure is also supported.

The existing NR protocol supports only the number of SRS ports being 1, 2, and 4. To further improve the performance of uplink transmission, it is necessary to support a larger quantity of SRS ports, for example, the number of SRS ports is 6 and 8. Because orthogonality between different SRS ports needs to be guaranteed as much as possible, existing SRS port mapping modes cannot be fully applied to a case with the number of SRS ports being 6 and 8.

D1 (US20210112498A1) discloses a method for channel sounding for wireless communications. Some implementations more specifically relate to scheduling sounding reference signal (SRS) resource sets for wireless devices having more than 4 receive (RX) antenna ports. In some implementations, a base station may determine an antenna switching capability of a user equipment (UE). The antenna switching capability indicates a number of RX antenna ports of the UE. The base station schedules a number of SRS resource sets for the UE based at least in part on the number of RX antenna ports in excess of four. For example, the number of RX antenna ports may be equal to 8. As another example, the number of RX antenna ports may be equal to 6. The base station further receives, from the UE, uplink transmissions of one or more SRS resources for each of the scheduled SRS resource sets.

D2 (WO2018127171A1) discloses a method for transmitting multiplexed sounding reference signal (SRS) ports in communications systems operating according to new radio (NR) technologies. An exemplary method includes obtaining an indication of a technique to use in transmitting sounding reference signals (SRS) via five or more antenna ports in one slot and transmitting the SRS via the five or more antenna ports according to the indicated technique

D3 (WO2021207746A2) discloses a method implemented by an access node includes including transmitting, by the access node to a user equipment (UE), a control information message comprising an association indicator indicating an association between a reference signal and a channel between the access node and the UE; and communicating, by the access node with the UE, the reference signal in accordance with at least one channel parameter associated with the channel between the access node and the UE.

D4 (WO2018126987A1) discloses the uplink reference signal sending and receiving processing methods. The uplink reference signal sending processing method includes: a base station determining a resource to be used by a terminal to send uplink reference signals for M ports or M layers, where M = 8 or 16; and the base station generating high-layer signaling or downlink control signaling and sending the high-layer signaling or downlink control signaling to the terminal, the high-layer signaling or the downlink control signaling comprising indication information for the resource. The uplink reference signal receiving processing method includes: a terminal receiving high-layer signaling or downlink control signaling sent by a base station, the high-layer signaling or the downlink control signaling comprising indication information for a resource to be used by the terminal to send uplink reference signals for M ports or M layers, where M = 8 or 16; and the terminal determining, according to the indication information, the resource to be used to send the uplink reference signals for the M ports or layers.

### SUMMARY

Embodiments of this application provide a port mapping method for sounding reference signals and a terminal, which can resolve the problem of port mapping for SRSs with the number of ports being 6 and 8.

According to a first aspect, a port mapping method for sounding reference signals is provided,
which is defined in claim 1.

According to a second aspect, a terminal is provided, which is defined in claim 9.

According to a third aspect, a readable storage medium is provided, which is defined in claim 10.

Further advantageous embodiments of the present application are indicated in the dependent claims.

It is to be understood that both the forgoing general description and the following detailed description are exemplary only, and are not restrictive of the present application.

### BRIEF DESCRIPTION OF DRAWINGS

FIG. 1 is a block diagram of a wireless communications system to which the embodiments of this application are applicable;
FIG. 2 is a schematic flowchart of a port mapping method for sounding reference signals according to an embodiment of this application;
FIG. 3 is a schematic structural diagram of a port mapping apparatus for sounding reference signals according to an embodiment of this application;
FIG. 4 is a schematic structural diagram of a communication device according to an embodiment of this application; and
FIG. 5 is a schematic diagram of a hardware structure of a terminal for implementing the embodiments of this application.

### DESCRIPTION OF EMBODIMENTS

The following clearly describes the technical solutions in the embodiments of this application with reference to the accompanying drawings in the embodiments of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

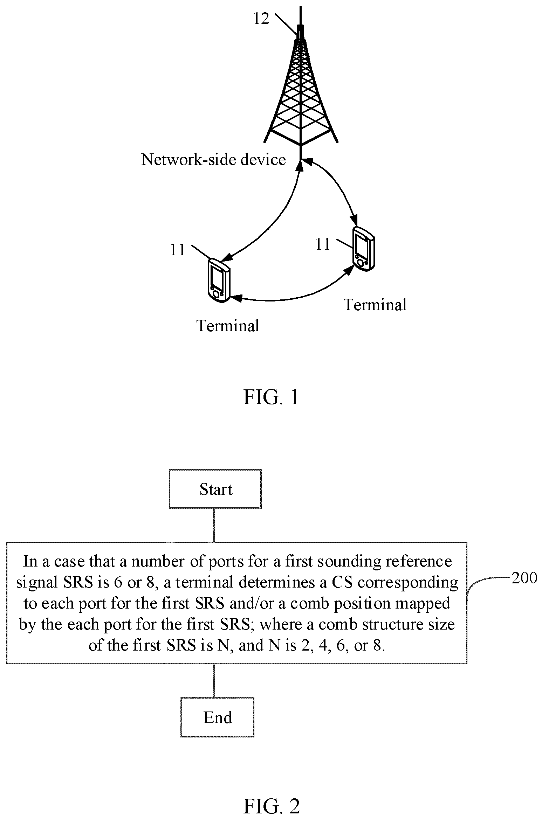

FIG. 1 is a block diagram of a wireless communications system to which the embodiments of this application are applicable. The wireless communications system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network storage function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

The following describes in detail a port mapping method for sounding reference signals provided in the embodiments of this application by using some embodiments and application scenarios thereof with reference to the accompanying drawings.

FIG. 2 is a schematic flowchart of a port mapping method for sounding reference signals according to an embodiment of this application. As shown in FIG. 2, the method includes:

Step 200: In a case that the number of ports for a first sounding reference signal SRS is 6 or 8, a terminal determines a cyclic shift (cyclic shift, CS) corresponding to the each port for the first SRS and/or a comb (comb) position mapped by the each port for the first SRS; where
a comb structure size of the first SRS is N, and N is 2, 4, 6, or 8.

It should be noted that the comb position can be understood as a subcarrier position mapped by an SRS in frequency domain.

This embodiment of this application provides a port mapping solution used for cases that different combs are configured for SRSs when the number of ports for SRSs is 6 and 8, which can improve the orthogonality of SRS reference signal transmission on each port. The CS corresponding to the each port for the first SRS is determined based on at least one of a cyclic shift offset value, a maximum cyclic shift offset value, a first parameter, a comb structure size, a port number, and the number of ports; and/or
a comb position mapped by the each port for the first SRS is determined based on at least one of a comb offset value, the comb structure size, the cyclic shift offset value, the maximum cyclic shift offset value, the first parameter, and the port number.

The first parameter is a value agreed by default between a network-side device and the terminal and/or a value indicated by the network-side device and/or a value reported by the terminal.

This embodiment of this application provides a method for determining CSs corresponding to ports for SRSs and comb positions mapped by the ports, which can improve the orthogonality of SRS reference signal transmission on the ports, thereby improving the performance of uplink transmission.

In a case that the number of ports is 8 and the comb structure size is 2, a CS mapping method 1 is as follows:
Different ports for the first SRS correspond to different CSs, that is, eight ports use different CSs; where
a CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports, where ${p}_{i} = 1000 + i ⋅$

It should be noted that ${n}_{SRS}^{cs} ∈ \left\{0,1,…,{n}_{SRS}^{cs , max}-1\right\}$ is a cyclic shift offset value configured by the network-side device through RRC signaling. The maximum cyclic shift offset value, namely ${n}_{SRS}^{cs , max}$, is ${n}_{SRS}^{cs , max} = 6$ if *K*_{TC} = 8 , ${n}_{SRS}^{cs , max} = 12$ if *K*_{TC} = 4 and ${n}_{SRS}^{cs , max} = 8$ if *K*_{TC} = 2 where *K*_{TC} is the comb structure size.

For the CS mapping method 1, specific CS values corresponding to ports are shown in Table 1.

**Table 1 Specific CS values corresponding to ports**

| | 1000 | 1001 | 1002 | 1003 | 1004 | 1005 | 1006 | 1007 |
|---|---|---|---|---|---|---|---|---|
| Initial CS 0 | 0 | 1 | 2 | 3 | 4 | 5 | 6 | 7 |
| Initial CS 1 | 1 | 2 | 3 | 4 | 5 | 6 | 7 | 0 |
| Initial CS 2 | 2 | 3 | 4 | 5 | 6 | 7 | 0 | 1 |
| Initial CS 3 | 3 | 4 | 5 | 6 | 7 | 0 | 1 | 2 |
| Initial CS 4 | 4 | 5 | 6 | 7 | 0 | 1 | 2 | 3 |
| Initial CS 5 | 5 | 6 | 7 | 0 | 1 | 2 | 3 | 4 |
| Initial CS 6 | 6 | 7 | 0 | 1 | 2 | 3 | 4 | 5 |
| Initial CS 7 | 7 | 0 | 1 | 2 | 3 | 4 | 5 | 6 |

It should be noted that the initial CS in each table in this application is a cyclic shift offset value ${n}_{SRS}^{cs}$*.*

Optionally, in a case that the number of ports is 8, the comb structure size is 2, and the CS mapping method 1 is used, a corresponding comb position mapping method 1 is as follows:
The each port for the first SRS is mapped to a same comb position, and a comb position mapped by the each port for the first SRS is obtained through calculation by using the following formula: ${k}_{TC}^{\left({p}_{i}\right)} = {\overline{k}}_{TC} ,$ where
${k}_{TC}^{\left({p}_{i}\right)}$ is a comb position mapped by port i, and *k̅_{TC}* is the comb offset value.

It should be noted that in the embodiments of this application, the comb offset value *k̅*_{TC} ∈ {0,1,..., *K*_{TC} -1} is configured by the network-side device through RRC signaling, where *K*_{TC} is a comb structure size, for example, for comb-4, *K*_{TC}=4.

In a case that the number of ports is 8, the comb structure size is 2, and the CS mapping method 1 is used, a corresponding comb position mapping method 2 is as follows:
Eight ports for the first SRS are divided into two groups, comb positions mapped by ports in a same group are the same, and ports in different groups are mapped to different comb positions.

That is, ports {1001, 1003, 1005, 1007} are one group and mapped to a same first comb position; and ports {1000, 1002, 1004, 1006} are one group and mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where ${k}_{TC}^{\left({p}_{i}\right)}$
is a comb position mapped by port i, *k̅_{TC}* is the comb offset value, and *K*_{TC} is the comb structure size.

In a case that the number of ports is 8, the comb structure size is 2, and the CS mapping method 1 is used, a corresponding comb position mapping method 3 is as follows:
The comb position mapped by the each port for the first SRS is related to the cyclic shift offset value; and for a specific cyclic shift offset value, eight ports for the first SRS are divided into two groups, comb positions mapped by ports in a same group are the same, and ports in different groups are mapped to different comb positions.

That is, the FDM multiplexing mode between ports is related to the cyclic shift offset value ${n}_{SRS}^{cs}$. The ports are grouped, and for a specific cyclic shift offset value, ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004, 1006\right\} \\ {\overline{k}}_{TC} & otherwise\end{matrix}\right. ,$ where ${k}_{TC}^{\left({p}_{i}\right)}$
is a comb position mapped by port i, *k̅_{TC}* is the comb offset value, and *K*_{TC} is the comb structure size.

Optionally, in a case that the number of ports is 8 and the comb structure size is 2, a CS mapping method 2 is as follows:
The ports are grouped, ports in different groups correspond to different CSs, and ports in a same group use a same CS.

Optionally, eight ports for the first SRS are divided into four groups, ports in a same group use a same CS, and ports in different groups use different CSs.

That is, ports {1000, 1001} are one group and use a same CS; ports {1002, 1003} are one group and use a same CS; ports {1004, 1005} are one group and use a same CS; and ports {1006, 1007} are one group and use a same CS.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=2.

For the CS mapping method 2, specific CS values corresponding to ports are shown in Table 2.

**Table 2 Specific CS values corresponding to ports**

| | 1000 | 1001 | 1002 | 1003 | 1004 | 1005 | 1006 | 1007 |
|---|---|---|---|---|---|---|---|---|
| Initial CS 0 | 0 | 0 | 2 | 2 | 4 | 4 | 6 | 6 |
| Initial CS 1 | 1 | 1 | 3 | 3 | 5 | 5 | 7 | 7 |
| Initial CS 2 | 2 | 2 | 4 | 4 | 6 | 6 | 0 | 0 |
| Initial CS 3 | 3 | 3 | 5 | 5 | 7 | 7 | 1 | 1 |
| Initial CS 4 | 4 | 4 | 6 | 6 | 0 | 0 | 2 | 2 |
| Initial CS 5 | 5 | 5 | 7 | 7 | 1 | 1 | 3 | 3 |
| Initial CS 6 | 6 | 6 | 0 | 0 | 2 | 2 | 4 | 4 |
| Initial CS 7 | 7 | 7 | 1 | 1 | 3 | 3 | 5 | 5 |

Optionally, in a case that the number of ports is 8, the comb structure size is 2, and the CS mapping method 2 is used, a corresponding comb position mapping method 4 is as follows:
The ports are grouped, and ports in different groups are mapped to different comb positions.

Optionally, eight ports for the first SRS are divided into two groups, comb positions mapped by ports in a same group are the same, and ports in different groups are mapped to different comb positions.

That is, ports {1001, 1003, 1005, 1007} are mapped to a same first comb position; and ports {1000, 1002, 1004, 1006} are mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where ${k}_{TC}^{\left({p}_{i}\right)}$
is a comb position mapped by port i, *k̅_{TC}* is the comb offset value, and *K*_{TC} is the comb structure size.

This embodiment of this application provides the CS mapping method and comb position mapping method used for a case that the number of ports for SRSs is 8 and the comb structure size is 2, which can be used to improve the orthogonality of SRS reference signal transmission on the ports, and further improve the performance of uplink transmission.

In a case that the number of ports is 8 and the comb structure size is 4, a CS mapping method 3 is as follows:

The ports are grouped, ports in different groups correspond to different CSs, and ports in a same group use a same CS.

Optionally, eight ports for the first SRS are divided into four groups, ports in the same group use a same CS, and ports in different groups use different CSs, that is, ports {1000, 1001} use a same CS; ports {1002, 1003} use a same CS; ports {1004, 1005} use a same CS; and ports {1006, 1007} use a same CS.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=2.

For the CS mapping method 3, specific CS values corresponding to ports are shown in Table 3.

**Table 3 Specific CS values corresponding to ports**

| | 1000 | 1001 | 1002 | 1003 | 1004 | 1005 | 1006 | 1007 |
|---|---|---|---|---|---|---|---|---|
| Initial CS 0 | 0 | 0 | 3 | 3 | 6 | 6 | 9 | 9 |
| Initial CS 1 | 1 | 1 | 4 | 4 | 7 | 7 | 10 | 10 |
| Initial CS 2 | 2 | 2 | 5 | 5 | 8 | 8 | 11 | 11 |
| Initial CS 3 | 3 | 3 | 6 | 6 | 9 | 9 | 0 | 0 |
| Initial CS 4 | 4 | 4 | 7 | 7 | 10 | 10 | 1 | 1 |
| Initial CS 5 | 5 | 5 | 8 | 8 | 11 | 11 | 2 | 2 |
| Initial CS 6 | 6 | 6 | 9 | 9 | 0 | 0 | 3 | 3 |
| Initial CS 7 | 7 | 7 | 10 | 10 | 1 | 1 | 4 | 4 |
| Initial CS 8 | 8 | 8 | 11 | 11 | 2 | 2 | 5 | 5 |
| Initial CS 9 | 9 | 9 | 0 | 0 | 3 | 3 | 6 | 6 |
| Initial CS 10 | 10 | 10 | 1 | 1 | 4 | 4 | 7 | 7 |
| Initial CS 11 | 11 | 11 | 2 | 2 | 5 | 5 | 8 | 8 |

Optionally, in a case that the number of ports is 8, the comb structure size is 4, and the CS mapping method 3 is used, a corresponding comb position mapping method 5 is as follows:
Eight ports for the first SRS are divided into two groups, comb positions mapped by ports in a same group are the same, and ports in different groups are mapped to different comb positions, that is, ports {1001, 1003, 1005, 1007} are mapped to a same first comb position, and ports {1000, 1002, 1004, 1006} are mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where ${k}_{TC}^{\left({p}_{i}\right)}$
is a comb position mapped by port i, *k̅_{TC}* is the comb offset value, and *K*_{TC} is the comb structure size.

Optionally, in a case that the number of ports is 8, the comb structure size is 4, and the CS mapping method 3 is used, a corresponding comb position mapping method 6 is as follows:
The comb position mapped by the each port for the first SRS is related to the cyclic shift offset value. Ports are grouped, and for a specific cyclic shift offset value, ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+1\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+3\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+\left({p}_{i}-1000\right)mod {K}_{TC}\right) mod {K}_{TC} & if {n}_{SRS}^{cs} ∈ \left\{{n}_{SRS}^{cs , max}/2,…,{n}_{SRS}^{cs , max}-1\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+\left({p}_{i}-1000\right)mod 4\right) mod {K}_{TC} & if {n}_{SRS}^{cs} ∈ \left\{{n}_{SRS}^{cs , max}/2,…,{n}_{SRS}^{cs , max}-1\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+3\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) {modK}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix},\right.$ or ${k}_{TC}^{\left({p}_{i}\right)} = \left\{\begin{matrix}\left({\overline{k}}_{TC}+{K}_{TC}/2-1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+{K}_{TC}/2+1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) {modK}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix},\right.$ where ${k}_{TC}^{\left({p}_{i}\right)}$
is a comb position mapped by port i, *k̅_{TC}* is the comb offset value, and *K*_{TC} is the comb structure size.

Optionally, in a case that the number of ports is 8 and the comb structure size is 4, a CS mapping method 4 is used as follows: The ports are grouped. Ports in different groups correspond to different CSs, and ports in a same group use a same CS. Eight ports for the first SRS are divided into two groups, ports in a same group use a same CS, and ports in different groups use different CSs.

That is, ports {1000, 1001, 1002, 1003} use a same CS; and ports {1004, 1005, 1006, 1007} use a same CS.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max}$ or ${n}_{SRS}^{cs , i} = \left[{n}_{SRS}^{cs}+\frac{{n}_{SRS}^{cs , max} ⋅ \left⌊\left({p}_{i}-1000\right)/{K}_{TC}\right⌋ ⋅ {K}_{TC}}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, *x* is the first parameter, *x* is a value agreed by default between the network-side device and the terminal and/or a value indicated by the network-side device and/or a value reported by the terminal, *x*=4, and *K*_{TC} is the comb structure size.

For the CS mapping method 4, specific CS values corresponding to ports are shown in Table 4.

**Table 4 Specific CS values corresponding to ports**

| | 1000 | 1001 | 1002 | 1003 | 1004 | 1005 | 1006 | 1007 |
|---|---|---|---|---|---|---|---|---|
| Initial CS 0 | 0 | 0 | 0 | 0 | 6 | 6 | 6 | 6 |
| Initial CS 1 | 1 | 1 | 1 | 1 | 7 | 7 | 7 | 7 |
| Initial CS 2 | 2 | 2 | 2 | 2 | 8 | 8 | 8 | 8 |
| Initial CS 3 | 3 | 3 | 3 | 3 | 9 | 9 | 9 | 9 |
| Initial CS 4 | 4 | 4 | 4 | 4 | 10 | 10 | 10 | 10 |
| Initial CS 5 | 5 | 5 | 5 | 5 | 11 | 11 | 11 | 11 |
| Initial CS 6 | 6 | 6 | 6 | 6 | 0 | 0 | 0 | 0 |
| Initial CS 7 | 7 | 7 | 7 | 7 | 1 | 1 | 1 | 1 |
| Initial CS 8 | 8 | 8 | 8 | 8 | 2 | 2 | 2 | 2 |
| Initial CS 9 | 9 | 9 | 9 | 9 | 3 | 3 | 3 | 3 |
| Initial CS 10 | 10 | 10 | 10 | 10 | 4 | 4 | 4 | 4 |
| Initial CS 11 | 11 | 11 | 11 | 11 | 5 | 5 | 5 | 5 |

Optionally, in a case that the number of ports is 8, the comb structure size is 4, and the CS mapping method 4 is used, a corresponding comb position mapping method 7 is as follows:
Eight ports for the first SRS are divided into four groups, comb positions mapped by ports in a same group are the same, and ports in different groups are mapped to different comb positions. That is, ports {1000, 1004} are mapped to a same first comb position, ports {1001, 1005} is mapped to a same second comb position, ports {1002, 1006} are mapped to a same third comb position, and ports { 1003, 1007} are mapped to a same fourth comb position, where the first comb position, the second comb position, the third comb position, and the fourth comb position are different.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1004\right\} \\ \left({\overline{k}}_{TC}+1\right) mod {K}_{TC} & if {p}_{i} ∈ \left\{1001, 1005\right\} \\ \left({\overline{k}}_{TC}+2\right) mod {K}_{TC} & if {p}_{i} ∈ \left\{1002, 1006\right\} \\ \left({\overline{k}}_{TC}+3\right) mod {K}_{TC} & if {p}_{i} ∈ \left\{1003, 1007\right\}\end{matrix}\right.$ or ${k}_{TC}^{\left({p}_{i}\right)} = \left({\overline{k}}_{TC}+\left({p}_{i}-1000\right)mod {K}_{TC}\right) mod {K}_{TC}$ or ${k}_{TC}^{\left({p}_{i}\right)} = \left({\overline{k}}_{TC}+\left({p}_{i}-1000\right)mod4\right) mod {K}_{TC}$ or ${k}_{TC}^{\left({p}_{i}\right)} = \left({\overline{k}}_{TC}+\left({p}_{i}-1000\right)mod x\right) mod {K}_{TC} ,$ where ${k}_{TC}^{\left({p}_{i}\right)}$
is a comb position mapped by port i, *k̅_{TC}* is the comb offset value, and *x* is the first parameter, where *x* is a value agreed by default between the network-side device and the terminal and/or a value indicated by the network-side device and/or a value reported by the terminal, and *x*=4.

This embodiment of this application provides the CS mapping method and comb position mapping method used for a case that the number of ports for SRSs is 8 and the comb structure size is 4, which can be used to improve the orthogonality of SRS reference signal transmission on the ports, and further improve the performance of uplink transmission.

Optionally, in a case that the number of ports is 8 and the comb structure size is 8, a CS mapping method 5 is as follows:
Eight ports for the first SRS are divided into two groups, ports in the same group use a same CS, and ports in different groups use different CSs, that is, ports { 1000, 1001, 1002, 1003} use a same CS, and ports {1004, 1005, 1006, 1007} use a same CS.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=4.

For the CS mapping method 5, specific CS values corresponding to ports are shown in Table 5.

**Table 5 Specific CS values corresponding to ports**

| | 1000 | 1001 | 1002 | 1003 | 1004 | 1005 | 1006 | 1007 |
|---|---|---|---|---|---|---|---|---|
| Initial CS 0 | 0 | 0 | 0 | 0 | 3 | 3 | 3 | 3 |
| Initial CS 1 | 1 | 1 | 1 | 1 | 4 | 4 | 4 | 4 |
| Initial CS 2 | 2 | 2 | 2 | 2 | 5 | 5 | 5 | 5 |
| Initial CS 3 | 3 | 3 | 3 | 3 | 0 | 0 | 0 | 0 |
| Initial CS 4 | 4 | 4 | 4 | 4 | 1 | 1 | 1 | 1 |
| Initial CS 5 | 5 | 5 | 5 | 5 | 2 | 2 | 2 | 2 |

Optionally, in a case that the number of ports is 8, the comb structure size is 8, and the CS mapping method 5 is used, a corresponding comb position mapping method 8 is as follows:
Eight ports for the first SRS are divided into four groups, comb positions mapped by ports in a same group are the same, and ports in different groups are mapped to different comb positions. That is, ports {1000, 1004} are mapped to a same first comb position, ports {1001, 1005} is mapped to a same second comb position, ports {1002, 1006} are mapped to a same third comb position, and ports { 1003, 1007} are mapped to a same fourth comb position, where the first comb position, the second comb position, the third comb position, and the fourth comb position are different.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1004\right\} \\ \left({\overline{k}}_{TC}+2\right) mod {K}_{TC} & if {p}_{i} ∈ \left\{1001, 1005\right\} \\ \left({\overline{k}}_{TC}+4\right) mod {K}_{TC} & if {p}_{i} ∈ \left\{1002, 1006\right\} \\ \left({\overline{k}}_{TC}+6\right) mod {K}_{TC} & if {p}_{i} ∈ \left\{1003, 1007\right\}\end{matrix}\right.$ or ${k}_{TC}^{\left({p}_{i}\right)} = \left({\overline{k}}_{TC}+\left(2\left({p}_{i}-1000\right)\right)mod 4\right) mod {K}_{TC}$ or ${k}_{TC}^{\left({p}_{i}\right)} = \left({\overline{k}}_{TC}+\left(8/x⋅\left({p}_{i}-1000\right)\right)mod x\right) mod {K}_{TC} ,$ where ${k}_{TC}^{\left({p}_{i}\right)}$
is a comb position mapped by port i, *k̅_{TC}* is the comb offset value, and *K*_{TC} is the comb structure size, and *x* is the first parameter, where *x* is a value agreed by default between the network-side device and the terminal and/or a value indicated by the network-side device and/or a value reported by the terminal, and *x*=4.

Optionally, in a case that the number of ports is 8 and the comb structure size is 8, a CS mapping method 6 is as follows:
Eight ports for the first SRS all use a same CS, and a CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max}$ or ${n}_{SRS}^{cs , i} = {n}_{SRS}^{cs} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=8.

For the CS mapping method 6, specific CS values corresponding to ports are shown in Table 6.

**Table 6 Specific CS values corresponding to ports**

| | 1000 | 1001 | 1002 | 1003 | 1004 | 1005 | 1006 | 1007 |
|---|---|---|---|---|---|---|---|---|
| Initial CS 0 | 0 | 0 | 0 | 0 | 0 | 0 | 0 | 0 |
| Initial CS 1 | 1 | 1 | 1 | 1 | 1 | 1 | 1 | 1 |
| Initial CS 2 | 2 | 2 | 2 | 2 | 2 | 2 | 2 | 2 |
| Initial CS 3 | 3 | 3 | 3 | 3 | 3 | 3 | 3 | 3 |
| Initial CS 4 | 4 | 4 | 4 | 4 | 4 | 4 | 4 | 4 |
| Initial CS 5 | 5 | 5 | 5 | 5 | 5 | 5 | 5 | 5 |

Optionally, in a case that the number of ports is 8, the comb structure size is 8, and the CS mapping method 6 is used, a corresponding comb position mapping method 9 is as follows:
Different ports for the first SRS are mapped to different comb positions.

It should be noted that mapping different ports for the first SRS to different comb positions can also be understood as grouping ports, with each port in one group, and ports in different groups are mapped to different comb positions, that is, different ports are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000\right\} \\ \left({\overline{k}}_{TC}+1\right) mod {K}_{TC} & if {p}_{i} ∈ \left\{1001\right\} \\ \left({\overline{k}}_{TC}+2\right) mod {K}_{TC} & if {p}_{i} ∈ \left\{1002\right\} \\ \left({\overline{k}}_{TC}+3\right) mod {K}_{TC} & if {p}_{i} ∈ \left\{1003\right\} \\ \left({\overline{k}}_{TC}+4\right) mod {K}_{TC} & if {p}_{i} ∈ \left\{1004\right\} \\ \left({\overline{k}}_{TC}+5\right) mod {K}_{TC} & if {p}_{i} ∈ \left\{1005\right\} \\ \left({\overline{k}}_{TC}+6\right) mod {K}_{TC} & if {p}_{i} ∈ \left\{1006\right\} \\ \left({\overline{k}}_{TC}+7\right) mod {K}_{TC} & if {p}_{i} ∈ \left\{1007\right\}\end{matrix}\right.$ or ${k}_{TC}^{\left({p}_{i}\right)} = \left({\overline{k}}_{TC}+{p}_{i}-1000\right) mod {K}_{TC}$ or ${k}_{TC}^{\left({p}_{i}\right)} = \left({\overline{k}}_{TC}+\left(8/x⋅\left({p}_{i}-1000\right)\right)mod x\right) mod {K}_{TC} ,$ where ${k}_{TC}^{\left({p}_{i}\right)}$
is a comb position mapped by port i, *k̅_{TC}* is the comb offset value, and *K*_{TC} is the comb structure size.

This embodiment of this application provides the CS mapping method and comb position mapping method used for a case that the number of ports for SRSs is 8 and the comb structure size is 8, which can be used to improve the orthogonality of SRS reference signal transmission on the ports, and further improve the performance of uplink transmission.

Optionally, in a case that the number of ports is 6 and the comb structure size is 2, a CS mapping method 7 is as follows:
Different ports for the first SRS use different CSs, and different ports correspond to different CSs through rounding down.

A CS corresponding to the each port for the first SRS is obtained through calculation by using the following formula: ${n}_{SRS}^{cs , i} = \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

For the CS mapping method 7, specific CS values corresponding to ports are shown in Table 7.

**Table 7 Specific CS values corresponding to ports**

| | 1000 | 1001 | 1002 | 1003 | 1004 | 1005 |
|---|---|---|---|---|---|---|
| Initial CS 0 | 0 | 1 | 2 | 4 | 5 | 6 |
| Initial CS 1 | 1 | 2 | 3 | 5 | 6 | 7 |
| Initial CS 2 | 2 | 3 | 4 | 6 | 7 | 0 |
| Initial CS 3 | 3 | 4 | 5 | 7 | 0 | 1 |
| Initial CS 4 | 4 | 5 | 6 | 0 | 1 | 2 |
| Initial CS 5 | 5 | 6 | 7 | 1 | 2 | 3 |
| Initial CS 6 | 6 | 7 | 0 | 2 | 3 | 4 |
| Initial CS 7 | 7 | 0 | 1 | 3 | 4 | 5 |

Optionally, in a case that the number of ports is 6, the comb structure size is 2, and the CS mapping method 7 is used, a corresponding comb position mapping method 10 is as follows:
Six ports for the first SRS are divided into two groups, comb positions mapped by ports in a same group are the same, and ports in different groups are mapped to different comb positions.

In an implementation, ports {1000, 1002, 1003, 1005} are one group and mapped to a same first comb position; and ports {1001, 1004} are one group and mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1003, 1005\right\} \\ {\overline{k}}_{TC} & otherwise\end{matrix}\right.$

In this case, a port for the second SRS and ports { 1001, 1004} for the first SRS are allowed to map to a same comb position.

It should be noted that the second SRS is one 2-port SRS; or the second SRS is one N-port SRS, where N>2, and two of the ports and the ports {1001, 1004} for the first SRS are mapped to a same comb position.

A cyclic shift offset value corresponding to the second SRS is equal to a value obtained by performing remainder calculation on a maximum cyclic shift offset value ${n}_{SRS}^{cs , max}$ corresponding to the first SRS after adding 3 to a cyclic shift offset value corresponding to the first SRS.

Alternatively, a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1004\right\} \\ {\overline{k}}_{TC} & otherwise\end{matrix}\right.$

In this case, a port for the second SRS and the ports {1001, 1004} for the first SRS are allowed to map to a same comb position. The second SRS is one 2-port SRS; or the second SRS is one N-port SRS, where N>2, and two of the ports and the ports {1001, 1004} for the first SRS are mapped to a same comb position.

A cyclic shift offset value corresponding to the second SRS is equal to a value obtained by performing remainder calculation on a maximum cyclic shift offset value corresponding to the first SRS after adding 3 to a cyclic shift offset value corresponding to the first SRS.

In another implementation, ports { 1000, 1002, 1004} are one group and mapped to a same first comb position; and ports {1001, 1003, 1005} are one group and mapped to a same second comb position. The first comb position and the second comb position are different. A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where ${k}_{TC}^{\left({p}_{i}\right)}$
is a comb position mapped by port i, *k̅_{TC}* is the comb offset value, and *K*_{TC} is the comb structure size.

Optionally, in a case that the number of ports is 6 and the comb structure size is 2, a CS mapping method 8 is as follows:

Different ports for the first SRS use different CSs, and different ports correspond to different CSs through rounding up.

A CS corresponding to the each port for the first SRS is obtained through calculation by using the following formula: ${n}_{SRS}^{cs , i} = \left[{n}_{SRS}^{cs}+\left⌈\frac{{n}_{SRS}^{cs , max} \left({p}_{i}-1000\right)}{{N}_{ap}^{SRS}}\right⌉\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

For the CS mapping method 8, specific CS values corresponding to ports are shown in Table 8.

**Table 8 Specific CS values corresponding to ports**

| | 1000 | 1001 | 1002 | 1003 | 1004 | 1005 |
|---|---|---|---|---|---|---|
| Initial CS 0 | 0 | 2 | 3 | 4 | 6 | 7 |
| Initial CS 1 | 1 | 3 | 4 | 5 | 7 | 0 |
| Initial CS 2 | 2 | 4 | 5 | 6 | 0 | 1 |
| Initial CS 3 | 3 | 5 | 6 | 7 | 1 | 2 |
| Initial CS 4 | 4 | 6 | 7 | 0 | 2 | 3 |
| Initial CS 5 | 5 | 7 | 0 | 1 | 3 | 4 |
| Initial CS 6 | 6 | 0 | 1 | 2 | 4 | 5 |
| Initial CS 7 | 7 | 1 | 2 | 3 | 5 | 6 |

Optionally, in a case that the number of ports is 6, the comb structure size is 2, and the CS mapping method 8 is used, a corresponding comb position mapping method 11 is as follows:
Six ports for the first SRS are divided into two groups, comb positions mapped by ports in a same group are the same, ports in different groups are mapped to different comb positions, and the number of ports in each group may be different.

In an implementation, ports {1000, 1001, 1003, 1004} are one group and mapped to a same first comb position; and ports { 1002, 1005} are one group and mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1001, 1003, 1004\right\} \\ {\overline{k}}_{TC} & otherwise\end{matrix}\right.$

In this case, a port for the third SRS and ports { 1002, 1005} for the first SRS are allowed to map to a same comb position.

It should be noted that the third SRS is one 2-port SRS; or the third SRS is one N-port SRS, where N>2, and two of the ports and the ports {1002, 1005} for the first SRS are mapped to a same comb position.

A cyclic shift offset value corresponding to the third SRS is equal to a value obtained by performing remainder calculation on a maximum cyclic shift offset value corresponding to the first SRS after adding 1 to a cyclic shift offset value corresponding to the first SRS.

Alternatively, a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1002, 1005\right\} \\ {\overline{k}}_{TC} & otherwise\end{matrix}\right.$

In this case, a port for the third SRS and ports { 1002, 1005} for the first SRS are allowed to map to a same comb position.

It should be noted that the third SRS is one 2-port SRS; or the third SRS is one N-port SRS, where N>2, and two of the ports and the ports {1002, 1005} for the first SRS are mapped to a same comb position.

A cyclic shift offset value corresponding to the third SRS is equal to a value obtained by performing remainder calculation on a maximum cyclic shift offset value corresponding to the first SRS after adding 1 to a cyclic shift offset value corresponding to the first SRS.

In another implementation, ports { 1000, 1002, 1004} are one group and mapped to a same first comb position; and ports {1001, 1003, 1005} are one group and mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where ${k}_{TC}^{\left({p}_{i}\right)}$
is a comb position mapped by port i, *k̅_{TC}* is the comb offset value, and *K*_{TC} is the comb structure size.

Optionally, in a case that the number of ports is 6 and the comb structure size is 2, a CS mapping method 9 is as follows:
Different ports for the first SRS use different CSs, some ports are rounded up, and some ports are rounded down.

A CS corresponding to the each port for the first SRS is obtained through calculation by using the following formula: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] mod {n}_{SRS}^{cs , max} & if {p}_{i} ∈ \left\{1001, 1004\right\} \\ \left[{n}_{SRS}^{cs}+\left⌈\frac{{n}_{SRS}^{cs , max} \left({p}_{i}-1000\right)}{{N}_{ap}^{SRS}}\right⌉\right] mod {n}_{SRS}^{cs , max} & if {p}_{i} ∈ \left\{1002, 1005\right\} \\ \left[{n}_{SRS}^{cs}+\frac{{n}_{SRS}^{cs , max} \left({p}_{i}-1000\right)}{{N}_{ap}^{SRS}}\right] mod {n}_{SRS}^{cs , max} & otherwise\end{matrix}\right. ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

For the CS mapping method 9, specific CS values corresponding to ports are shown in Table 9.

**Table 9 Specific CS values corresponding to ports**

| | 1000 | 1001 | 1002 | 1003 | 1004 | 1005 |
|---|---|---|---|---|---|---|
| Initial CS 0 | 0 | 1 | 3 | 4 | 5 | 7 |
| Initial CS 1 | 1 | 2 | 4 | 5 | 6 | 0 |
| Initial CS 2 | 2 | 3 | 5 | 6 | 7 | 1 |
| Initial CS 3 | 3 | 4 | 6 | 7 | 0 | 2 |
| Initial CS 4 | 4 | 5 | 7 | 0 | 1 | 3 |
| Initial CS 5 | 5 | 6 | 0 | 1 | 2 | 4 |
| Initial CS 6 | 6 | 7 | 1 | 2 | 3 | 5 |
| Initial CS 7 | 7 | 0 | 2 | 3 | 4 | 6 |

Optionally, in a case that the number of ports is 6, the comb structure size is 2, and the CS mapping method 9 is used, a corresponding comb position mapping method 12 is as follows:
Six ports for the first SRS are divided into two groups, comb positions mapped by ports in a same group are the same, ports in different groups are mapped to different comb positions, and the number of ports in each group may be different.

In an implementation, ports {1001, 1002, 1004, 1005} are one group and mapped to a same first comb position; and ports { 1000, 1003} are one group and mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1002, 1004, 1005\right\} \\ {\overline{k}}_{TC} & otherwise\end{matrix}\right.$

In this case, a port for the fourth SRS and ports { 1000, 1003} for the first SRS are allowed to map to a same comb position.

It should be noted that the fourth SRS is one 2-port SRS; or the fourth SRS is one N-port SRS, where N>2, and two of the ports and the ports {1000, 1003} for the first SRS are mapped to a same comb position.

A cyclic shift offset value corresponding to the fourth SRS is equal to a value obtained by performing remainder calculation on a maximum cyclic shift offset value corresponding to the first SRS after adding 2 to a cyclic shift offset value corresponding to the first SRS.

Alternatively, a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1003\right\} \\ {\overline{k}}_{TC} & otherwise\end{matrix}\right.$

In this case, a port for the fourth SRS and ports { 1000, 1003} for the first SRS are allowed to map to a same comb position.

It should be noted that the fourth SRS is one 2-port SRS; or the fourth SRS is one N-port SRS, where N>2, and two of the ports and the ports {1000, 1003} for the first SRS are mapped to a same comb position.

A cyclic shift offset value corresponding to the fourth SRS is equal to a value obtained by performing remainder calculation on a maximum cyclic shift offset value corresponding to the first SRS after adding 2 to a cyclic shift offset value corresponding to the first SRS.

In another implementation, ports { 1000, 1002, 1004} are one group and mapped to a same first comb position; and ports {1001, 1003, 1005} are one group and mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 2, a CS mapping method is as follows:

Different ports for the first SRS use different CSs, some ports are rounded up, and some ports are rounded down.

A CS corresponding to the each port for the first SRS is obtained through calculation by using the following formula: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} if {p}_{i} ∈ \left\{1001\right\} \\ \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} if {p}_{i} ∈ \left\{1002, 1004, 1005\right\} \\ \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} otherwise\end{matrix},\right.$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

For the CS mapping method 10, specific CS values corresponding to ports are shown in Table 10.

**Table 10 Specific CS values corresponding to ports**

| | 1000 | 1001 | 1002 | 1003 | 1004 | 1005 |
|---|---|---|---|---|---|---|
| Initial CS 0 | 0 | 1 | 3 | 4 | 6 | 7 |
| Initial CS 1 | 1 | 2 | 4 | 5 | 7 | 0 |
| Initial CS 2 | 2 | 3 | 5 | 6 | 0 | 1 |
| Initial CS 3 | 3 | 4 | 6 | 7 | 1 | 2 |
| Initial CS 4 | 4 | 5 | 7 | 0 | 2 | 3 |
| Initial CS 5 | 5 | 6 | 0 | 1 | 3 | 4 |
| Initial CS 6 | 6 | 7 | 1 | 2 | 4 | 5 |
| Initial CS 7 | 7 | 0 | 2 | 3 | 5 | 6 |

Optionally, in a case that the number of ports is 6, the comb structure size is 2, and the CS mapping method 10 is used, a corresponding comb position mapping method 13 is as follows:
Six ports for the first SRS are divided into two groups, comb positions mapped by ports in a same group are the same, ports in different groups are mapped to different comb positions, and the number of ports in each group is the same.

That is, ports { 1000, 1002, 1004} are one group and mapped to a same first comb position; and ports {1001, 1003, 1005} are one group and mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

This embodiment of this application provides the CS mapping method and comb position mapping method used for a case that the number of ports for SRSs is 6 and the comb structure size is 2, which can be used to improve the orthogonality of SRS reference signal transmission on the ports, and further improve the performance of uplink transmission.

Optionally, in a case that the number of ports is 6 and the comb structure size is 4, a CS mapping method 11 is as follows:
Different ports for the first SRS use different CSs, that is, six ports use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

For the CS mapping method 11, specific CS values corresponding to ports are shown in Table 11.

**Table 11 Specific CS values corresponding to ports**

| | 1000 | 1001 | 1002 | 1003 | 1004 | 1005 |
|---|---|---|---|---|---|---|
| Initial CS 0 | 0 | 2 | 4 | 6 | 8 | 10 |
| Initial CS 1 | 1 | 3 | 5 | 7 | 9 | 11 |
| Initial CS 2 | 2 | 4 | 6 | 8 | 10 | 0 |
| Initial CS 3 | 3 | 5 | 7 | 9 | 11 | 1 |
| Initial CS 4 | 4 | 6 | 8 | 10 | 0 | 2 |
| Initial CS 5 | 5 | 7 | 9 | 11 | 1 | 3 |
| Initial CS 6 | 6 | 8 | 10 | 0 | 2 | 4 |
| Initial CS 7 | 7 | 9 | 11 | 1 | 3 | 5 |
| Initial CS 8 | 8 | 10 | 0 | 2 | 4 | 6 |
| Initial CS 9 | 9 | 11 | 1 | 3 | 5 | 7 |
| Initial CS 10 | 10 | 0 | 2 | 4 | 6 | 8 |
| Initial CS 11 | 11 | 1 | 3 | 5 | 7 | 9 |

Optionally, in a case that the number of ports is 6, the comb structure size is 4, and the CS mapping method 11 is used, a corresponding comb position mapping method 14 is as follows:
The comb position mapped by the each port for the first SRS is related to the cyclic shift offset value; and for a specific cyclic shift offset value, six ports for the first SRS are divided into two groups, comb positions mapped by ports in a same group are the same, and ports in different groups are mapped to different comb positions. A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

This embodiment of this application provides the CS mapping method and comb position mapping method used for a case that the number of ports for SRSs is 6 and the comb structure size is 4, which can be used to improve the orthogonality of SRS reference signal transmission on the ports, and further improve the performance of uplink transmission.

Optionally, in a case that the number of ports is 6 and the comb structure size is 6, a CS mapping method 12 is as follows:
Six ports for the first SRS are divided into two groups, ports in the same group use a same CS, and ports in different groups use different CSs, that is, ports {1000, 1001, 1002} are one group and use a same CS, and ports {1003, 1004, 1005} are one group and use a same CS.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x =3.*

For the CS mapping method 12, specific CS values corresponding to ports are shown in Table 12.

**Table 12 Specific CS values corresponding to ports**

| | 1000 | 1001 | 1002 | 1003 | 1004 | 1005 |
|---|---|---|---|---|---|---|
| Initial CS 0 | 0 | 0 | 0 | 4 | 4 | 4 |
| Initial CS 1 | 1 | 1 | 1 | 5 | 5 | 5 |
| Initial CS 2 | 2 | 2 | 2 | 6 | 6 | 6 |
| Initial CS 3 | 3 | 3 | 3 | 7 | 7 | 7 |
| Initial CS 4 | 4 | 4 | 4 | 0 | 0 | 0 |
| Initial CS 5 | 5 | 5 | 5 | 1 | 1 | 1 |
| Initial CS 6 | 6 | 6 | 6 | 2 | 2 | 2 |
| Initial CS 7 | 7 | 7 | 7 | 3 | 3 | 3 |

Optionally, in a case that the number of ports is 6, the comb structure size is 6, and the CS mapping method 12 is used, a corresponding comb position mapping method 15 is as follows:
Six ports for the first SRS are divided into three groups, comb positions mapped by ports in a same group are the same, and ports in different groups are mapped to different comb positions, that is, ports {1000, 1003} are mapped to a same first comb position, ports {1000, 1004} are mapped to a same second comb position, and ports { 1002, 1005} are mapped to a same third comb position. The first comb position, the second comb position, and the third comb position are different.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1003\right\} \\ \left({\overline{k}}_{TC}+{n}_{1}\right) mod {K}_{TC} & if {p}_{i} ∈ \left\{1001, 1004\right\} \\ \left({\overline{k}}_{TC}+{n}_{2}\right) mod {K}_{TC} & if {p}_{i} ∈ \left\{1002, 1005\right\}\end{matrix}\right.$ or ${k}_{TC}^{\left({p}_{i}\right)} = \left\{\begin{matrix}\left({\overline{k}}_{TC}+{n}_{1}\right) mod {K}_{TC} & if {p}_{i} ∈ \left\{1000, 1003\right\} \\ \left({\overline{k}}_{TC}+{n}_{2}\right) mod {K}_{TC} & if {p}_{i} ∈ \left\{1001, 1004\right\} \\ \left({\overline{k}}_{TC}+{n}_{3}\right) mod {K}_{TC} & if {p}_{i} ∈ \left\{1002, 1005\right\}\end{matrix}\right. ,$ where
${k}_{TC}^{\left({p}_{i}\right)}$ is a comb position mapped by port i, *k̅_{TC}* is the comb offset value, and *K*_{TC} is the comb structure size, *n*₁ is a value agreed by default between the network-side device and the terminal and/or a value indicated by the network-side device and/or a value reported by the terminal, *n*₂ is a value agreed by default between the network-side device and the terminal and/or a value indicated by the network-side device and/or a value reported by the terminal, and *n*₃ is a value agreed by default between the network-side device and the terminal and/or a value indicated by the network-side device and/or a value reported by the terminal.

Optionally, *n*₁ = 2 and *n*₂ = 4.

Optionally, *n*₁ = 0, *n*₂ = 2, and *n*₃ = 4*.*

This embodiment of this application provides the CS mapping method and comb position mapping method used for a case that the number of ports for SRSs is 6 and the comb structure size is 6, which can be used to improve the orthogonality of SRS reference signal transmission on the ports, and further improve the performance of uplink transmission.

Optionally, in a case that the number of ports is 6 and the comb structure size is 8, a CS mapping method 13 is as follows:
Different ports for the first SRS use different CSs, that is, six ports use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

For the CS mapping method 13, specific CS values corresponding to ports are shown in Table 13.

**Table 13 Specific CS values corresponding to ports**

| | 1000 | 1001 | 1002 | 1003 | 1004 | 1005 |
|---|---|---|---|---|---|---|
| Initial CS 0 | 0 | 1 | 2 | 3 | 4 | 5 |
| Initial CS 1 | 1 | 2 | 3 | 4 | 5 | 0 |
| Initial CS 2 | 2 | 3 | 4 | 5 | 0 | 1 |
| Initial CS 3 | 3 | 4 | 5 | 0 | 1 | 2 |
| Initial CS 4 | 4 | 5 | 0 | 1 | 2 | 3 |
| Initial CS 5 | 5 | 0 | 1 | 2 | 3 | 4 |

Optionally, in a case that the number of ports is 6, the comb structure size is 8, and the CS mapping method 13 is used, the corresponding comb position mapping method 16 is as follows:
The comb position mapped by the each port for the first SRS is related to the cyclic shift offset value; and for a specific cyclic shift offset value, six ports for the first SRS are divided into two groups, comb positions mapped by ports in a same group are the same, and ports in different groups are mapped to different comb positions. A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 8, a CS mapping method 14 is as follows:
Six ports for the first SRS are divided into three groups, ports in the same group use a same CS, and ports in different groups use different CSs, that is, ports {1000, 1001} are one group and use a same CS, ports {1002, 1003} are one group and use a same CS, and ports {1004, 1005} are one group and use a same CS.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=2.

For the CS mapping method 14, specific CS values corresponding to ports are shown in Table 14.

**Table 14 Specific CS values corresponding to ports**

| | 1000 | 1001 | 1002 | 1003 | 1004 | 1005 |
|---|---|---|---|---|---|---|
| Initial CS 0 | 0 | 0 | 2 | 2 | 4 | 4 |
| Initial CS 1 | 1 | 1 | 3 | 3 | 5 | 5 |
| Initial CS 2 | 2 | 2 | 4 | 4 | 0 | 0 |
| Initial CS 3 | 3 | 3 | 5 | 5 | 1 | 1 |
| Initial CS 4 | 4 | 4 | 0 | 0 | 2 | 2 |
| Initial CS 5 | 5 | 5 | 1 | 1 | 3 | 3 |

In a case that the number of ports is 6, the comb structure size is 8, and the CS mapping method 14 is used, the corresponding comb position mapping method 17 is as follows:

Optionally, six ports for the first SRS are divided into two groups, comb positions mapped by ports in a same group are the same, and ports in different groups are mapped to different comb positions, that is, ports {1001, 1003, 1005} are mapped to a same first comb position, and ports { 1000, 1002, 1004} are mapped to a same second comb position. The first comb position and the second comb position are different.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix},\right.$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 8, a CS mapping method 15 is as follows:

Six ports for the first SRS are divided into two groups, ports in the same group use a same CS, and ports in different groups use different CSs, that is, ports {1000, 1001, 1002} are one group and use a same CS, and ports {1003, 1004, 1005} are one group and use a same CS.

A CS of a sequence mapped by the ports for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x =3.*

For the CS mapping method 15, specific CS values corresponding to ports are shown in Table 15.

**Table 15 Specific CS values corresponding to ports**

| | 1000 | 1001 | 1002 | 1003 | 1004 | 1005 |
|---|---|---|---|---|---|---|
| Initial CS 0 | 0 | 0 | 0 | 3 | 3 | 3 |
| Initial CS 1 | 1 | 1 | 1 | 4 | 4 | 4 |
| Initial CS 2 | 2 | 2 | 2 | 5 | 5 | 5 |
| Initial CS 3 | 3 | 3 | 3 | 0 | 0 | 0 |
| Initial CS 4 | 4 | 4 | 4 | 1 | 1 | 1 |
| Initial CS 5 | 5 | 5 | 5 | 2 | 2 | 2 |

Optionally, in a case that the number of ports is 6, the comb structure size is 8, and the CS mapping method 15 is used, the corresponding comb position mapping method 18 is as follows:

Six ports for the first SRS are divided into three groups, comb positions mapped by ports in a same group are the same, and ports in different groups are mapped to different comb positions, that is, ports {1000, 1003} are mapped to a same first comb position, ports {1000, 1004} are mapped to a same second comb position, and ports { 1002, 1005} are mapped to a same third comb position. The first comb position, the second comb position, and the third comb position are different.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1003\right\} \\ \left({\overline{k}}_{TC}+{n}_{1}\right) mod {K}_{TC} & if {p}_{i} ∈ \left\{1001, 1004\right\} \\ \left({\overline{k}}_{TC}+{n}_{2}\right) mod {K}_{TC} & if {p}_{i} ∈ \left\{1002, 1005\right\}\end{matrix}\right.$ or ${k}_{TC}^{\left({p}_{i}\right)} = \left\{\begin{matrix}\left({\overline{k}}_{TC}+{n}_{1}\right) mod {K}_{TC} & if {p}_{i} ∈ \left\{1000, 1003\right\} \\ \left({\overline{k}}_{TC}+{n}_{2}\right) mod {K}_{TC} & if {p}_{i} ∈ \left\{1001, 1004\right\} \\ \left({\overline{k}}_{TC}+{n}_{3}\right) mod {K}_{TC} & if {p}_{i} ∈ \left\{1002, 1005\right\}\end{matrix}\right. ,$ where ${k}_{TC}^{\left({p}_{i}\right)}$
is a comb position mapped by port i, *k̅_{TC}* is the comb offset value, and *K*_{TC} is the comb structure size, *n*₁ is a value agreed by default between the network-side device and the terminal and/or a value indicated by the network-side device and/or a value reported by the terminal, *n*₂ is a value agreed by default between the network-side device and the terminal and/or a value indicated by the network-side device and/or a value reported by the terminal, and *n*₃ is a value agreed by default between the network-side device and the terminal and/or a value indicated by the network-side device and/or a value reported by the terminal.

Optionally, *n*₁ = 3 and *n*₂ = 6.

Optionally, *n*₁ = 0, *n*₂ = 3, and *n*₃ = 6*.*

This embodiment of this application provides the CS mapping method and comb position mapping method used for a case that the number of ports for SRSs is 6 and the comb structure size is 8, which can be used to improve the orthogonality of SRS reference signal transmission on the ports, and further improve the performance of uplink transmission.

The execution subject of the port mapping method for sounding reference signals provided in the embodiments of this application may be a port mapping apparatus for sounding reference signals. In the embodiments of this application, the port mapping apparatus for sounding reference signals provided in the embodiments of this application is described by using the port mapping method for sounding reference signals being executed by the port mapping apparatus for sounding reference signals as an example.

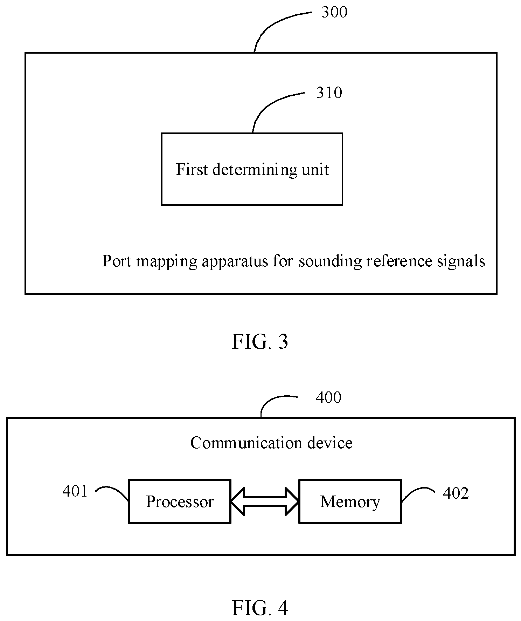

FIG. 3 is a schematic flowchart of a port mapping apparatus for sounding reference signals according to an embodiment of this application. As shown in FIG. 3, the apparatus 300 includes:
a first determining unit 310, configured to: in a case that the number of ports for a first sounding reference signal SRS is 6 or 8, determine, for a terminal, a cyclic shift CS corresponding to each port for the first SRS and/or a comb (comb) position mapped by the each port for the first SRS; where
a comb structure size of the first SRS is N, and N is 2, 4, 6, or 8.

Optionally, the CS corresponding to the each port for the first SRS is determined based on at least one of a cyclic shift offset value, a maximum cyclic shift offset value, a first parameter, a comb structure size, a port number, and the number of ports; and/or
a comb position mapped by the each port for the first SRS is determined based on at least one of a comb offset value, a comb structure size, a cyclic shift offset value, a maximum cyclic shift offset value, a first parameter, and a port number.

Optionally, in a case that the number of ports is 8 and a comb structure size is 2, different ports for the first SRS correspond to different CSs, and a CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, the each port for the first SRS is mapped to a same comb position, and a comb position mapped by the each port for the first SRS is obtained through calculation by using the following formula: ${k}_{TC}^{\left({p}_{i}\right)} = {\overline{k}}_{TC} ,$ where
${k}_{TC}^{\left({p}_{i}\right)}$ is a comb position mapped by port i, and *k̅_{TC}* is the comb offset value.

Optionally, eight ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, the comb position mapped by the each port for the first SRS is related to the cyclic shift offset value; and for a specific cyclic shift offset value, eight ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004, 1006\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 8 and the comb structure size is 2, eight ports for the first SRS are divided into four groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between a network-side device and the terminal and/or a value indicated by the network-side device and/or a value reported by the terminal, and *x*=2.

Optionally, eight ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 8 and the comb structure size is 4, eight ports for the first SRS are divided into four groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=2.

Optionally, eight ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, the comb position mapped by the each port for the first SRS is related to the cyclic shift offset value.

A comb position mapped by the each port for the first SRS is obtained through calculation by using the following formula: ${k}_{TC}^{\left({p}_{i}\right)} = \left\{\begin{matrix}\left({\overline{k}}_{TC}+1\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+3\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+\left({p}_{i}-1000\right)mod {K}_{TC}\right) mod {K}_{TC} & if {n}_{SRS}^{cs} ∈ \left\{{n}_{SRS}^{cs , max}/2,…,{n}_{SRS}^{cs , max}-1\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+\left({p}_{i}-1000\right)mod 4\right) mod {K}_{TC} & if {n}_{SRS}^{cs} ∈ \left\{{n}_{SRS}^{cs , max}/2,…,{n}_{SRS}^{cs , max}-1\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+3\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) {modK}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix},\right.$ or ${k}_{TC}^{\left({p}_{i}\right)} = \left\{\begin{matrix}\left({\overline{k}}_{TC}+{K}_{TC}/2-1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+{K}_{TC}/2+1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) {modK}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix},\right.$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 8 and the comb structure size is 4, eight ports for the first SRS are divided into two groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max}$ or ${n}_{SRS}^{cs , i} = \left[{n}_{SRS}^{cs}+\frac{{n}_{SRS}^{cs , max} ⋅ \left⌊\left({p}_{i}-1000\right)/{K}_{TC}\right⌋ ⋅ {K}_{TC}}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, *x* is the first parameter, *x* is a value agreed by default between the network-side device and the terminal and/or a value indicated by the network-side device and/or a value reported by the terminal, *x*=4, and *K*_{TC} is the comb structure size.

Optionally, eight ports for the first SRS are divided into four groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1004\right\} \\ \left({\overline{k}}_{TC}+1\right) mod {K}_{TC} & if {p}_{i} ∈ \left\{1001, 1005\right\} \\ \left({\overline{k}}_{TC}+2\right) mod {K}_{TC} & if {p}_{i} ∈ \left\{1002, 1006\right\} \\ \left({\overline{k}}_{TC}+3\right) mod {K}_{TC} & if {p}_{i} ∈ \left\{1003, 1007\right\}\end{matrix}\right.$ or ${k}_{TC}^{\left({p}_{i}\right)} = \left({\overline{k}}_{TC}+\left({p}_{i}-1000\right)mod {K}_{TC}\right) mod {K}_{TC}$ or ${k}_{TC}^{\left({p}_{i}\right)} = \left({\overline{k}}_{TC}+\left({p}_{i}-1000\right)mod4\right) mod {K}_{TC}$
or ${k}_{TC}^{\left({p}_{i}\right)} = \left({\overline{k}}_{TC}+\left({p}_{i}-1000\right)mod x\right) mod {K}_{TC} ,$ where
${k}_{TC}^{\left({p}_{i}\right)}$ is a comb position mapped by port i, and *k̅_{TC}* is the comb offset value.

Optionally, in a case that the number of ports is 8 and the comb structure size is 8, eight ports for the first SRS are divided into two groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=4.

Optionally, eight ports for the first SRS are divided into four groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1004\right\} \\ \left({\overline{k}}_{TC}+2\right) mod {K}_{TC} & if {p}_{i} ∈ \left\{1001, 1005\right\} \\ \left({\overline{k}}_{TC}+4\right) mod {K}_{TC} & if {p}_{i} ∈ \left\{1002, 1006\right\} \\ \left({\overline{k}}_{TC}+6\right) mod {K}_{TC} & if {p}_{i} ∈ \left\{1003, 1007\right\}\end{matrix}\right.$ or ${k}_{TC}^{\left({p}_{i}\right)} = \left({\overline{k}}_{TC}+\left(2\left({p}_{i}-1000\right)\right)mod 4\right) mod {K}_{TC}$ or ${k}_{TC}^{\left({p}_{i}\right)} = \left({\overline{k}}_{TC}+\left(8/x⋅\left({p}_{i}-1000\right)\right)mod x\right) mod {K}_{TC} ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 8 and the comb structure size is 8, all eight ports for the first SRS use a same CS.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max}$ or ${n}_{SRS}^{cs , i} = {n}_{SRS}^{cs} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=8.

Optionally, different ports for the first SRS are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000\right\} \\ \left({\overline{k}}_{TC}+1\right) mod {K}_{TC} & if {p}_{i} ∈ \left\{1001\right\} \\ \left({\overline{k}}_{TC}+2\right) mod {K}_{TC} & if {p}_{i} ∈ \left\{1002\right\} \\ \left({\overline{k}}_{TC}+3\right) mod {K}_{TC} & if {p}_{i} ∈ \left\{1003\right\} \\ \left({\overline{k}}_{TC}+4\right) mod {K}_{TC} & if {p}_{i} ∈ \left\{1004\right\} \\ \left({\overline{k}}_{TC}+5\right) mod {K}_{TC} & if {p}_{i} ∈ \left\{1005\right\} \\ \left({\overline{k}}_{TC}+6\right) mod {K}_{TC} & if {p}_{i} ∈ \left\{1006\right\} \\ \left({\overline{k}}_{TC}+7\right) mod {K}_{TC} & if {p}_{i} ∈ \left\{1007\right\}\end{matrix}\right.$ or ${k}_{TC}^{\left({p}_{i}\right)} = \left({\overline{k}}_{TC}+{p}_{i}-1000\right) mod {K}_{TC}$ or ${k}_{TC}^{\left({p}_{i}\right)} = \left({\overline{k}}_{TC}+\left(8/x⋅\left({p}_{i}-1000\right)\right)mod x\right) mod {K}_{TC} ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 2, different ports for the first SRS use different CSs, and
a CS corresponding to the each port for the first SRS is obtained through calculation by using the following formula: ${n}_{SRS}^{cs , i} = \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1003, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where ${k}_{TC}^{\left({p}_{i}\right)}$
is a comb position mapped by port i, *k̅_{TC}* is the comb offset value, and *K*_{TC} is the comb structure size.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1003, 1005\right\} \\ {\overline{k}}_{TC} & otherwise\end{matrix}\right. ,$ a port for a second SRS and ports {1001, 1004} for the first SRS are mapped to a same comb position, and a cyclic shift offset value corresponding to the second SRS is equal to a value obtained by performing remainder calculation on a maximum cyclic shift offset value corresponding to the first SRS after adding 3 to a cyclic shift offset value corresponding to the first SRS.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1004\right\} \\ {\overline{k}}_{TC} & otherwise\end{matrix}\right. ,$ a port for a second SRS and ports {1001, 1004} for the first SRS are mapped to a same comb position, and a cyclic shift offset value corresponding to the second SRS is equal to a value obtained by performing remainder calculation on a maximum cyclic shift offset value corresponding to the first SRS after adding 3 to a cyclic shift offset value corresponding to the first SRS.

Optionally, in a case that the number of ports is 6 and the comb structure size is 2, different ports for the first SRS use different CSs, and
a CS corresponding to the each port for the first SRS is obtained through calculation by using the following formula: ${n}_{SRS}^{cs , i} = \left[{n}_{SRS}^{cs}+\left⌈\frac{{n}_{SRS}^{cs , max} \left({p}_{i}-1000\right)}{{N}_{ap}^{SRS}}\right⌉\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1001, 1003, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1002, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1001, 1003, 1004\right\} \\ {\overline{k}}_{TC} & otherwise\end{matrix}\right.$ a port for a third SRS and ports { 1002, 1005} for the first SRS are mapped to a same comb position, and a cyclic shift offset value corresponding to the third SRS is equal to a value obtained by performing remainder calculation on a maximum cyclic shift offset value corresponding to the first SRS after adding 1 to a cyclic shift offset value corresponding to the first SRS.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1002, 1005\right\} \\ {\overline{k}}_{TC} & otherwise\end{matrix}\right. ,$ a port for a third SRS and ports { 1002, 1005} for the first SRS are mapped to a same comb position, and a cyclic shift offset value corresponding to the third SRS is equal to a value obtained by performing remainder calculation on a maximum cyclic shift offset value corresponding to the first SRS after adding 1 to a cyclic shift offset value corresponding to the first SRS.

Optionally, in a case that the number of ports is 6 and the comb structure size is 2, different ports for the first SRS use different CSs, and
a CS corresponding to the each port for the first SRS is obtained through calculation by using the following formula: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] mod {n}_{SRS}^{cs , max} & if {p}_{i} ∈ \left\{1001, 1004\right\} \\ \left[{n}_{SRS}^{cs}+\left⌈\frac{{n}_{SRS}^{cs , max} \left({p}_{i}-1000\right)}{{N}_{ap}^{SRS}}\right⌉\right] mod {n}_{SRS}^{cs , max} & if {p}_{i} ∈ \left\{1002, 1005\right\} \\ \left[{n}_{SRS}^{cs}+\frac{{n}_{SRS}^{cs , max} \left({p}_{i}-1000\right)}{{N}_{ap}^{SRS}}\right] mod {n}_{SRS}^{cs , max} & otherwise\end{matrix}\right. ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1002, 1004, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1003\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1002, 1004, 1005\right\} \\ {\overline{k}}_{TC} & otherwise\end{matrix}\right. ,$ a port for a fourth SRS and ports { 1000, 1003} for the first SRS are mapped to a same comb position, and a cyclic shift offset value corresponding to the fourth SRS is equal to a value obtained by performing remainder calculation on a maximum cyclic shift offset value corresponding to the first SRS after adding 2 to a cyclic shift offset value corresponding to the first SRS.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1003\right\} \\ {\overline{k}}_{TC} & otherwise\end{matrix}\right. ,$ a port for a fourth SRS and ports { 1000, 1003} for the first SRS are mapped to a same comb position, and a cyclic shift offset value corresponding to the fourth SRS is equal to a value obtained by performing remainder calculation on a maximum cyclic shift offset value corresponding to the first SRS after adding 2 to a cyclic shift offset value corresponding to the first SRS.

Optionally, in a case that the number of ports is 6 and the comb structure size is 2, different ports for the first SRS use different CSs, and
a CS corresponding to the each port for the first SRS is obtained through calculation by using the following formula: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} if {p}_{i} ∈ \left\{1001\right\} \\ \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} if {p}_{i} ∈ \left\{1002, 1004, 1005\right\} \\ \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} otherwise\end{matrix},\right.$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 4, different ports for the first SRS use different CSs, and
a CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, the comb position mapped by the each port for the first SRS is related to the cyclic shift offset value; and for a specific cyclic shift offset value, six ports for the first SRS are divided into two groups, comb positions mapped by ports in a same group are the same, and ports in different groups are mapped to different comb positions. A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005\right\} \\ {\overline{k}}_{TC} & otherwise\end{matrix}\right. ,$ or ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 6, six ports for the first SRS are divided into two groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x =3.*

Optionally, six ports for the first SRS are divided into three groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1003\right\} \\ \left({\overline{k}}_{TC}+{n}_{1}\right) mod {K}_{TC} & if {p}_{i} ∈ \left\{1001, 1004\right\} \\ \left({\overline{k}}_{TC}+{n}_{2}\right) mod {K}_{TC} & if {p}_{i} ∈ \left\{1002, 1005\right\}\end{matrix}\right.$ or ${k}_{TC}^{\left({p}_{i}\right)} = \left\{\begin{matrix}\left({\overline{k}}_{TC}+{n}_{1}\right) mod {K}_{TC} & if {p}_{i} ∈ \left\{1000, 1003\right\} \\ \left({\overline{k}}_{TC}+{n}_{2}\right) mod {K}_{TC} & if {p}_{i} ∈ \left\{1001, 1004\right\} \\ \left({\overline{k}}_{TC}+{n}_{3}\right) mod {K}_{TC} & if {p}_{i} ∈ \left\{1002, 1005\right\}\end{matrix}\right. ,$ where
${k}_{TC}^{\left({p}_{i}\right)}$ is a comb position mapped by port i, *k̅_{TC}* is the comb offset value, and *K*_{TC} is the comb structure size, *n*₁ is a value agreed by default between the network-side device and the terminal and/or a value indicated by the network-side device and/or a value reported by the terminal, *n*₂ is a value agreed by default between the network-side device and the terminal and/or a value indicated by the network-side device and/or a value reported by the terminal, and *n*₃ is a value agreed by default between the network-side device and the terminal and/or a value indicated by the network-side device and/or a value reported by the terminal.

Optionally, in a case that the number of ports is 6 and the comb structure size is 8, different ports for the first SRS use different CSs, and
a CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, the comb position mapped by the each port for the first SRS is related to the cyclic shift offset value; and for a specific cyclic shift offset value, six ports for the first SRS are divided into two groups, comb positions mapped by ports in a same group are the same, and ports in different groups are mapped to different comb positions. A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 8, six ports for the first SRS are divided into three groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x*=2.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix},\right.$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 8, six ports for the first SRS are divided into two groups, ports in a same group uses a same CS, and ports in different groups use different CSs.

A CS of a sequence mapped by the ports for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x* =3.

Optionally, six ports for the first SRS are divided into three groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1003\right\} \\ \left({\overline{k}}_{TC}+{n}_{1}\right) mod {K}_{TC} & if {p}_{i} ∈ \left\{1001, 1004\right\} \\ \left({\overline{k}}_{TC}+{n}_{2}\right) mod {K}_{TC} & if {p}_{i} ∈ \left\{1002, 1005\right\}\end{matrix}\right.$ or ${k}_{TC}^{\left({p}_{i}\right)} = \left\{\begin{matrix}\left({\overline{k}}_{TC}+{n}_{1}\right) mod {K}_{TC} & if {p}_{i} ∈ \left\{1000, 1003\right\} \\ \left({\overline{k}}_{TC}+{n}_{2}\right) mod {K}_{TC} & if {p}_{i} ∈ \left\{1001, 1004\right\} \\ \left({\overline{k}}_{TC}+{n}_{3}\right) mod {K}_{TC} & if {p}_{i} ∈ \left\{1002, 1005\right\}\end{matrix}\right. ,$ where
${k}_{TC}^{\left({p}_{i}\right)}$ is a comb position mapped by port i, *k̅_{TC}* is the comb offset value, and *K*_{TC} is the comb structure size, *n*₁ is a value agreed by default between the network-side device and the terminal and/or a value indicated by the network-side device and/or a value reported by the terminal, *n*₂ is a value agreed by default between the network-side device and the terminal and/or a value indicated by the network-side device and/or a value reported by the terminal, and *n*₃ is a value agreed by default between the network-side device and the terminal and/or a value indicated by the network-side device and/or a value reported by the terminal.

This embodiment of this application provides a port mapping solution used for cases that different combs are configured for SRSs when the number of ports for SRSs is 6 and 8, which can improve the orthogonality of SRS reference signal transmission on each port, thereby improving performance of uplink transmission.

The port mapping apparatus for sounding reference signals in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The port mapping apparatus for sounding reference signals provided in this embodiment of this application is capable of implementing the processes implemented in the method embodiments in FIG. 2, with the same technical effects achieved. To avoid repetition, details are not described herein again.

Optionally, as shown in FIG. 4, an embodiment of this application further provides a communication device 400, including a processor 401, a memory 402, and a program or instructions stored in the memory 402 and executable on the processor 401. For example, when the communication device 400 is a terminal and when the program or the instructions are executed by the processor 401, the steps of the foregoing embodiments of the port mapping method for sounding reference signals are implemented, with the same technical effects achieved. When the communication device 400 is a network-side device and when the program or the instructions are executed by the processor 401, the steps of the foregoing embodiments of the port mapping method for sounding reference signals are implemented, with the same technical effects achieved. To avoid repetition, details are not described herein again.

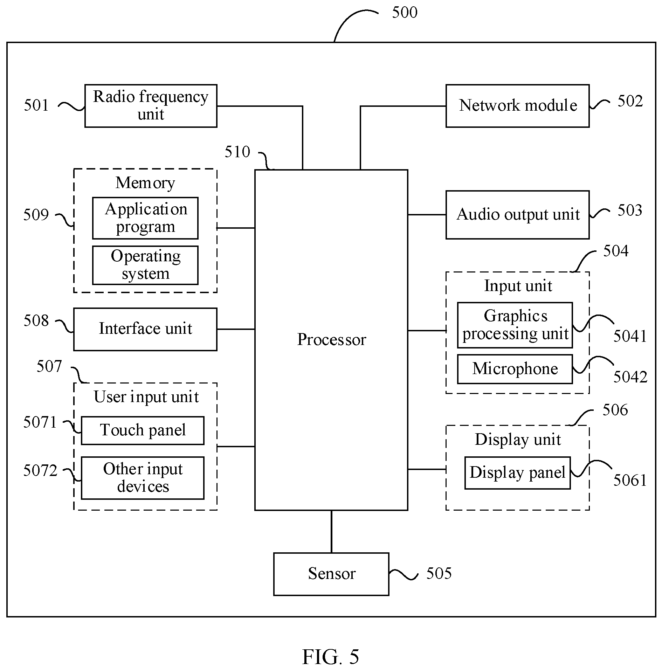

An embodiment of this application further provides a terminal, including a processor and a communication interface, where the processor is configured to: in a case that the number of ports for a first sounding reference signal SRS is 6 or 8, determine a cyclic shift CS corresponding to each port for the first SRS and/or a comb (comb) position mapped by the each port for the first SRS; where a comb structure size of the first SRS is N, and N is 2, 4, 6, or 8. The terminal embodiments correspond to the foregoing terminal-side method embodiments, and the implementation processes and implementations of the foregoing method embodiments can be applied to the terminal embodiments, with the same technical effects achieved. Specifically, FIG. 5 is a schematic diagram of a hardware structure of a terminal for implementing the embodiments of this application.

The terminal 500 includes but is not limited to at least part of components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or a combination of some components, or the components disposed differently. Details are not described herein again.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, and the like. The user input unit 507 may include at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (such as a volume control key or a power on/off key), a trackball, a mouse, a joystick, and the like. Details are not described herein.

In this embodiment of this application, the radio frequency unit 501 receives downlink data from a network-side device, and then sends the downlink data to the processor 510 for processing. In addition, the radio frequency unit 501 may send uplink data to the network-side device. Generally, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may include a first storage area for storing a program or instructions and a second storage area for storing data. The first storage area may store an operating system, an application program or instruction required by at least one function (for example, a sound playback function or an image playback function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 509 in the embodiments of this application includes but is not limited to these and any other suitable types of memories.

The processor 510 may include one or more processing units. Optionally, an application processor and a modem processor may be integrated in the processor 510. This application processor primarily processes operations involving an operating system, user interfaces, application programs, and the like. The modem processor primarily processes radio communication signals, for example, being a baseband processor. It can be understood that the modem processor may alternatively be not integrated in the processor 510.

The processor 510 is configured to: in a case that the number of ports for a first sounding reference signal SRS is 6 or 8, determine a cyclic shift CS corresponding to each port for the first SRS and/or a comb (comb) position mapped by the each port for the first SRS; where a comb structure size of the first SRS is N, and N is 2, 4, 6, or 8. Optionally, the CS corresponding to the each port for the first SRS is determined based on at least one of a cyclic shift offset value, a maximum cyclic shift offset value, a first parameter, a comb structure size, a port number, and the number of ports; and/or
a comb position mapped by the each port for the first SRS is determined based on at least one of a comb offset value, a comb structure size, a cyclic shift offset value, a maximum cyclic shift offset value, a first parameter, and a port number.

Optionally, in a case that the number of ports is 8 and a comb structure size is 2, different ports for the first SRS correspond to different CSs, and a CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, the each port for the first SRS is mapped to a same comb position, and a comb position mapped by the each port for the first SRS is obtained through calculation by using the following formula: ${k}_{TC}^{\left({p}_{i}\right)} = {\overline{k}}_{TC} ,$ where
${k}_{TC}^{\left({p}_{i}\right)}$ is a comb position mapped by port i, and *k̅_{TC}* is the comb offset value.

Optionally, eight ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, the comb position mapped by the each port for the first SRS is related to the cyclic shift offset value; and for a specific cyclic shift offset value, eight ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004, 1006\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 8 and the comb structure size is 2, eight ports for the first SRS are divided into four groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x* =2.

Optionally, eight ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 8 and the comb structure size is 4, eight ports for the first SRS are divided into four groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x* =2.

Optionally, eight ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, the comb position mapped by the each port for the first SRS is related to the cyclic shift offset value.
a comb position mapped by the each port for the first SRS is obtained through calculation by using the following formula: ${k}_{TC}^{\left({p}_{i}\right)} = \left\{\begin{matrix}\left({\overline{k}}_{TC}+1\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+3\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+\left({p}_{i}-1000\right)mod {K}_{TC}\right) mod {K}_{TC} & if {n}_{SRS}^{cs} ∈ \left\{{n}_{SRS}^{cs , max}/2,…,{n}_{SRS}^{cs , max}-1\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+\left({p}_{i}-1000\right)mod 4\right) mod {K}_{TC} & if {n}_{SRS}^{cs} ∈ \left\{{n}_{SRS}^{cs , max}/2,…,{n}_{SRS}^{cs , max}-1\right\} \\ \left({\overline{k}}_{TC}+{K}_{TC}/2\right) mod {K}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+3\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) {modK}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix},\right.$ or ${k}_{TC}^{\left({p}_{i}\right)} = \left\{\begin{matrix}\left({\overline{k}}_{TC}+{K}_{TC}/2-1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1002, 1006\right\} \\ \left({\overline{k}}_{TC}+{K}_{TC}/2\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1005\right\} \\ \left({\overline{k}}_{TC}+{K}_{TC}/2+1\right) {modK}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1003, 1007\right\} \\ \left({\overline{k}}_{TC}+{K}_{TC}/2\right) {modK}_{TC} & if {n}_{SRS}^{cs} ∉ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix},\right.$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 8 and the comb structure size is 4, eight ports for the first SRS are divided into two groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ or ${n}_{SRS}^{cs , i} = \left[{n}_{SRS}^{cs}+\frac{{n}_{SRS}^{cs , max} ⋅ \left⌊\left({p}_{i}-1000\right)/{K}_{TC}\right⌋ ⋅ {K}_{TC}}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, *x* is the first parameter, *x* is a value agreed by default between the network-side device and the terminal and/or a value indicated by the network-side device and/or a value reported by the terminal, *x* =4, and *K*_{TC} is the comb structure size.

Optionally, eight ports for the first SRS are divided into four groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1004\right\} \\ \left({\overline{k}}_{TC}+1\right) mod {K}_{TC} & if {p}_{i} ∈ \left\{1001, 1005\right\} \\ \left({\overline{k}}_{TC}+2\right) mod {K}_{TC} & if {p}_{i} ∈ \left\{1002, 1006\right\} \\ \left({\overline{k}}_{TC}+3\right) mod {K}_{TC} & if {p}_{i} ∈ \left\{1003, 1007\right\}\end{matrix}\right.$ or ${k}_{TC}^{\left({p}_{i}\right)} = \left({\overline{k}}_{TC}+\left({p}_{i}-1000\right)mod {K}_{TC}\right) mod {K}_{TC}$ or ${k}_{TC}^{\left({p}_{i}\right)} = \left({\overline{k}}_{TC}+\left({p}_{i}-1000\right)mod4\right) mod {K}_{TC}$ or ${k}_{TC}^{\left({p}_{i}\right)} = \left({\overline{k}}_{TC}+\left({p}_{i}-1000\right)mod x\right) mod {K}_{TC} ,$ where
${k}_{TC}^{\left({p}_{i}\right)}$ is a comb position mapped by port i, and *k̅_{TC}* is the comb offset value.

Optionally, in a case that the number of ports is 8 and the comb structure size is 8, eight ports for the first SRS are divided into two groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x* =4.

Optionally, eight ports for the first SRS are divided into four groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1004\right\} \\ \left({\overline{k}}_{TC}+2\right) mod {K}_{TC} & if {p}_{i} ∈ \left\{1001, 1005\right\} \\ \left({\overline{k}}_{TC}+4\right) mod {K}_{TC} & if {p}_{i} ∈ \left\{1002, 1006\right\} \\ \left({\overline{k}}_{TC}+6\right) mod {K}_{TC} & if {p}_{i} ∈ \left\{1003, 1007\right\}\end{matrix}\right.$ or ${k}_{TC}^{\left({p}_{i}\right)} = \left({\overline{k}}_{TC}+\left(2\left({p}_{i}-1000\right)\right)mod 4\right) mod {K}_{TC}$ or ${k}_{TC}^{\left({p}_{i}\right)} = \left({\overline{k}}_{TC}+\left(8/x⋅\left({p}_{i}-1000\right)\right)mod x\right) mod {K}_{TC} ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 8 and the comb structure size is 8, all eight ports for the first SRS use a same CS.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max}$ or ${n}_{SRS}^{cs , i} = {n}_{SRS}^{cs} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x* =8.

Optionally, different ports for the first SRS are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000\right\} \\ \left({\overline{k}}_{TC}+1\right) mod {K}_{TC} & if {p}_{i} ∈ \left\{1001\right\} \\ \left({\overline{k}}_{TC}+2\right) mod {K}_{TC} & if {p}_{i} ∈ \left\{1002\right\} \\ \left({\overline{k}}_{TC}+3\right) mod {K}_{TC} & if {p}_{i} ∈ \left\{1003\right\} \\ \left({\overline{k}}_{TC}+4\right) mod {K}_{TC} & if {p}_{i} ∈ \left\{1004\right\} \\ \left({\overline{k}}_{TC}+5\right) mod {K}_{TC} & if {p}_{i} ∈ \left\{1005\right\} \\ \left({\overline{k}}_{TC}+6\right) mod {K}_{TC} & if {p}_{i} ∈ \left\{1006\right\} \\ \left({\overline{k}}_{TC}+7\right) mod {K}_{TC} & if {p}_{i} ∈ \left\{1007\right\}\end{matrix}\right.$ or ${k}_{TC}^{\left({p}_{i}\right)} = \left({\overline{k}}_{TC}+{p}_{i}-1000\right) mod {K}_{TC}$ or ${k}_{TC}^{\left({p}_{i}\right)} = \left({\overline{k}}_{TC}+\left(8/x⋅\left({p}_{i}-1000\right)\right)mod x\right) mod {K}_{TC} ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 2, different ports for the first SRS use different CSs, and
a CS corresponding to the each port for the first SRS is obtained through calculation by using the following formula: ${n}_{SRS}^{cs , i} = \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1003, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix},\right.$ where
${k}_{TC}^{\left({p}_{i}\right)}$ is a comb position mapped by port i, *k̅_{TC}* is the comb offset value, and *K*_{TC} is the comb structure size.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1003, 1005\right\} \\ {\overline{k}}_{TC} & otherwise\end{matrix}\right.$ a port for a second SRS and ports {1001, 1004} for the first SRS are mapped to a same comb position, and a cyclic shift offset value corresponding to the second SRS is equal to a value obtained by performing remainder calculation on a maximum cyclic shift offset value corresponding to the first SRS after adding 3 to a cyclic shift offset value corresponding to the first SRS.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1004\right\} \\ {\overline{k}}_{TC} & otherwise\end{matrix}\right. ,$ a port for a second SRS and ports {1001, 1004} for the first SRS are mapped to a same comb position, and a cyclic shift offset value corresponding to the second SRS is equal to a value obtained by performing remainder calculation on a maximum cyclic shift offset value corresponding to the first SRS after adding 3 to a cyclic shift offset value corresponding to the first SRS.

Optionally, in a case that the number of ports is 6 and the comb structure size is 2, different ports for the first SRS use different CSs, and
a CS corresponding to the each port for the first SRS is obtained through calculation by using the following formula: ${n}_{SRS}^{cs , i} = \left[{n}_{SRS}^{cs}+\left⌈\frac{{n}_{SRS}^{cs , max} \left({p}_{i}-1000\right)}{{N}_{ap}^{SRS}}\right⌉\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1001, 1003, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1002, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1001, 1003, 1004\right\} \\ {\overline{k}}_{TC} & otherwise\end{matrix},\right.$ a port for a third SRS and ports { 1002, 1005} for the first SRS are mapped to a same comb position, and a cyclic shift offset value corresponding to the third SRS is equal to a value obtained by performing remainder calculation on a maximum cyclic shift offset value corresponding to the first SRS after adding 1 to a cyclic shift offset value corresponding to the first SRS.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1002, 1005\right\} \\ {\overline{k}}_{TC} & otherwise\end{matrix}\right. ,$ a port for a third SRS and ports { 1002, 1005} for the first SRS are mapped to a same comb position, and a cyclic shift offset value corresponding to the third SRS is equal to a value obtained by performing remainder calculation on a maximum cyclic shift offset value corresponding to the first SRS after adding 1 to a cyclic shift offset value corresponding to the first SRS.

Optionally, in a case that the number of ports is 6 and the comb structure size is 2, different ports for the first SRS use different CSs, and
a CS corresponding to the each port for the first SRS is obtained through calculation by using the following formula: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] mod {n}_{SRS}^{cs , max} & if {p}_{i} ∈ \left\{1001, 1004\right\} \\ \left[{n}_{SRS}^{cs}+\left⌈\frac{{n}_{SRS}^{cs , max} \left({p}_{i}-1000\right)}{{N}_{ap}^{SRS}}\right⌉\right] mod {n}_{SRS}^{cs , max} & if {p}_{i} ∈ \left\{1002, 1005\right\} \\ \left[{n}_{SRS}^{cs}+\frac{{n}_{SRS}^{cs , max} \left({p}_{i}-1000\right)}{{N}_{ap}^{SRS}}\right] mod {n}_{SRS}^{cs , max} & otherwise\end{matrix}\right. ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1002, 1004, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1003\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. , where$
${k}_{TC}^{\left({p}_{i}\right)}$ is a comb position mapped by port i, *k̅_{TC}* is the comb offset value, and *K*_{TC} is the comb structure size.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1002, 1004, 1005\right\} \\ {\overline{k}}_{TC} & otherwise\end{matrix}\right. ,$ a port for a fourth SRS and ports { 1000, 1003} for the first SRS are mapped to a same comb position, and a cyclic shift offset value corresponding to the fourth SRS is equal to a value obtained by performing remainder calculation on a maximum cyclic shift offset value corresponding to the first SRS after adding 2 to a cyclic shift offset value corresponding to the first SRS.

Optionally, in a case that a comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1003\right\} \\ {\overline{k}}_{TC} & otherwise\end{matrix}\right. ,$ a port for a fourth SRS and ports { 1000, 1003} for the first SRS are mapped to a same comb position, and a cyclic shift offset value corresponding to the fourth SRS is equal to a value obtained by performing remainder calculation on a maximum cyclic shift offset value corresponding to the first SRS after adding 2 to a cyclic shift offset value corresponding to the first SRS.

Optionally, in a case that the number of ports is 6 and the comb structure size is 2, different ports for the first SRS use different CSs, and
a CS corresponding to the each port for the first SRS is obtained through calculation by using the following formula: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} if {p}_{i} ∈ \left\{1001\right\} \\ \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} if {p}_{i} ∈ \left\{1002, 1004, 1005\right\} \\ \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} otherwise\end{matrix},\right.$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix},\right.$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 4, different ports for the first SRS use different CSs, and
a CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, the comb position mapped by the each port for the first SRS is related to the cyclic shift offset value; and for a specific cyclic shift offset value, six ports for the first SRS are divided into two groups, comb positions mapped by ports in a same group are the same, and ports in different groups are mapped to different comb positions. A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 6, six ports for the first SRS are divided into two groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x =*3*.*

Optionally, six ports for the first SRS are divided into three groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1003\right\} \\ \left({\overline{k}}_{TC}+{n}_{1}\right) mod {K}_{TC} & if {p}_{i} ∈ \left\{1001, 1004\right\} \\ \left({\overline{k}}_{TC}+{n}_{2}\right) mod {K}_{TC} & if {p}_{i} ∈ \left\{1002, 1005\right\}\end{matrix}\right.$ or ${k}_{TC}^{\left({p}_{i}\right)} = \left\{\begin{matrix}\left({\overline{k}}_{TC}+{n}_{1}\right) mod {K}_{TC} & if {p}_{i} ∈ \left\{1000, 1003\right\} \\ \left({\overline{k}}_{TC}+{n}_{2}\right) mod {K}_{TC} & if {p}_{i} ∈ \left\{1001, 1004\right\} \\ \left({\overline{k}}_{TC}+{n}_{3}\right) mod {K}_{TC} & if {p}_{i} ∈ \left\{1002, 1005\right\}\end{matrix}\right. ,$ where
${k}_{TC}^{\left({p}_{i}\right)}$ is a comb position mapped by port i, *k̅_{TC}* is the comb offset value, and *K*_{TC} is the comb structure size, *n*₁ is a value agreed by default between the network-side device and the terminal and/or a value indicated by the network-side device and/or a value reported by the terminal, *n*₂ is a value agreed by default between the network-side device and the terminal and/or a value indicated by the network-side device and/or a value reported by the terminal, and *n*₃ is a value agreed by default between the network-side device and the terminal and/or a value indicated by the network-side device and/or a value reported by the terminal.

Optionally, in a case that the number of ports is 6 and the comb structure size is 8, different ports for the first SRS use different CSs, and
a CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, and ${N}_{ap}^{SRS}$ is the number of ports.

Optionally, the comb position mapped by the each port for the first SRS is related to the cyclic shift offset value; and for a specific cyclic shift offset value, six ports for the first SRS are divided into two groups, comb positions mapped by ports in a same group are the same, and ports in different groups are mapped to different comb positions. A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004\right\} \\ {\overline{k}}_{TC} & otherwise\end{matrix}\right. ,$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 8, six ports for the first SRS are divided into three groups, ports in a same group uses a same CS, and ports in different groups use different CSs.

A CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x* =2.

Optionally, six ports for the first SRS are divided into two groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix},\right.$ where
${k}_{TC}^{\left({p}_{i}\right)}$ is a comb position mapped by port i, *k̅_{TC}* is the comb offset value, and *K*_{TC} is the comb structure size.

Optionally, in a case that the number of ports is 6 and the comb structure size is 8, six ports for the first SRS are divided into two groups, ports in a same group uses a same CS, and ports in different groups use different CSs.

A CS of a sequence mapped by the ports for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ where
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is a port number, ${N}_{ap}^{SRS}$ is the number of ports, and *x* is the first parameter, where *x* is a value agreed by default between the network-side device and the terminal and/or a value indicated by the network-side device and/or a value reported by the terminal, and *x =*3*.*

Optionally, six ports for the first SRS are divided into three groups, comb positions mapped by ports in a same group are the same, and ports in different groups are mapped to different comb positions.

A comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1003\right\} \\ \left({\overline{k}}_{TC}+{n}_{1}\right) mod {K}_{TC} & if {p}_{i} ∈ \left\{1001, 1004\right\} \\ \left({\overline{k}}_{TC}+{n}_{2}\right) mod {K}_{TC} & if {p}_{i} ∈ \left\{1002, 1005\right\}\end{matrix}\right.$ or ${k}_{TC}^{\left({p}_{i}\right)} = \left\{\begin{matrix}\left({\overline{k}}_{TC}+{n}_{1}\right) mod {K}_{TC} & if {p}_{i} ∈ \left\{1000, 1003\right\} \\ \left({\overline{k}}_{TC}+{n}_{2}\right) mod {K}_{TC} & if {p}_{i} ∈ \left\{1001, 1004\right\} \\ \left({\overline{k}}_{TC}+{n}_{3}\right) mod {K}_{TC} & if {p}_{i} ∈ \left\{1002, 1005\right\}\end{matrix}\right. ,$ where
${k}_{TC}^{\left({p}_{i}\right)}$ is a comb position mapped by port i, *k̅_{TC}* is the comb offset value, and *K*_{TC} is the comb structure size, *n*₁ is a value agreed by default between the network-side device and the terminal and/or a value indicated by the network-side device and/or a value reported by the terminal, *n*₂ is a value agreed by default between the network-side device and the terminal and/or a value indicated by the network-side device and/or a value reported by the terminal, and *n*₃ is a value agreed by default between the network-side device and the terminal and/or a value indicated by the network-side device and/or a value reported by the terminal.

This embodiment of this application provides a port mapping solution used for cases that different combs are configured for SRSs when the number of ports for SRSs is 6 and 8, which can improve the orthogonality of SRS reference signal transmission on each port, thereby improving performance of uplink transmission.

An embodiment of this application further provides a readable storage medium, where a program or instructions are stored in the readable storage medium. When the program or the instructions are executed by a processor, the processes of the foregoing embodiments of the port mapping method for sounding reference signals described above can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing embodiment of the port mapping method for sounding reference signals, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the port mapping method for sounding reference signals, with the same technical effects achieved. To avoid repetition, details are not repeated herein.

An embodiment of this application further provides a communications system, which includes a terminal and a network-side device, where the terminal can be configured to execute the steps of the port mapping method for sounding reference signals.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

## Claims

1. A port mapping method for sounding reference signals performed by a terminal, comprising:
in a case that a number of ports for a first sounding reference signal, SRS, is 6 or 8, determining (200), by a terminal (11), a cyclic shift, CS, corresponding to each port for the first SRS and/or a comb position mapped by the each port for the first SRS; wherein
a comb structure size of the first SRS is N, and N is 2, 4, 6, or 8;
the CS corresponding to each port for the first SRS and the comb position mapped by the each port for the first SRS are both used for SRS transmission; wherein the CS corresponding to the each port for the first SRS is determined based on at least one of a cyclic shift offset value, a maximum cyclic shift offset value, a first parameter, a comb structure size, a port number, and the number of ports; and/or a comb position mapped by the each port for the first SRS is determined based on at least one of a comb offset value, the comb structure size, the cyclic shift offset value, the maximum cyclic shift offset value, the first parameter, and the port number; in a case that the number of ports is 8 and the comb structure size is 2, different ports for the first SRS correspond to different CSs, and the CS corresponding to the each port for the first SRS is obtained through calculation by using the following formula: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ wherein
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is the port number, and ${N}_{ap}^{SRS}$ is the number of ports; **characterised in that** the comb position mapped by the each port for the first SRS is related to the cyclic shift offset value; and for a specific cyclic shift offset value, eight ports for the first SRS are divided into two groups, comb positions mapped by ports in a same group are same, and ports in different groups are mapped to different comb positions; and
the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {n}_{SRS}^{cs} ∈ \left\{{n}_{SRS}^{cs , max}/2,…,{n}_{SRS}^{cs , max}-1\right\} and {p}_{i} ∈ \left\{1000, 1002, 1004, 1006\right\} \\ {\overline{k}}_{TC} & otherwise\end{matrix},\right.$ wherein
${k}_{TC}^{\left({p}_{i}\right)}$ is a comb position mapped by the port i, *k̅_{TC}* is the comb offset value, and *K*_{TC} is the comb structure size in a case that the number of ports is 8 and the comb structure size is 4, eight ports for the first SRS are divided into four groups, ports in a same group use a same CS, and ports in different groups use different CSs; and:
the CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ wherein
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is the port number, ${N}_{ap}^{SRS}$ is the number of ports, and *x* is the first parameter, wherein *x* is a value agreed by default between a network-side device (12) and the terminal (11) and/or a value indicated by the network-side device (12) and/or a value reported by the terminal (11), and *x* equals to 2; and
in a case that the number of ports is 8 and the comb structure size is 8, eight ports for the first SRS are divided into two groups, ports in a same group use a same CS, and ports in different groups use different CSs; and
the CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ wherein
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is the port number, ${N}_{ap}^{SRS}$ is the number of ports, and x is the first parameter, wherein *x* is a value agreed by default between a network-side device (12) and the terminal (11) and/or a value indicated by the network-side device (12) and/or a value reported by the terminal (11), and *x* equals to 4.

2. The port mapping method for sounding reference signals according to claim 1, wherein the eight ports for the first SRS are divided into two groups, comb positions mapped by ports in a same group are same, and ports in different groups are mapped to different comb positions; and
the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005, 1007\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004, 1006\right\} \\ {\overline{k}}_{TC} & otherwise\end{matrix},\right.$ wherein
${k}_{TC}^{\left({p}_{i}\right)}$ is a comb position mapped by the port i, *k̅_{TC}* is the comb offset value, and *K*_{TC} is the comb structure size.

3. The port mapping method for sounding reference signals according to claim 1, wherein the eight ports for the first SRS are divided into four groups, comb positions mapped by ports in a same group are same, and ports in different groups are mapped to different comb positions; and
the comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000, 1004\right\} \\ \left({\overline{k}}_{TC}+2\right) mod {K}_{TC} & if {p}_{i} ∈ \left\{1001, 1005\right\} \\ \left({\overline{k}}_{TC}+4\right) mod {K}_{TC} & if {p}_{i} ∈ \left\{1002, 1006\right\} \\ \left({\overline{k}}_{TC}+6\right) mod {K}_{TC} & if {p}_{i} ∈ \left\{1003, 1007\right\}\end{matrix}\right.$ or ${k}_{TC}^{\left({p}_{i}\right)} = \left({\overline{k}}_{TC}+\left(2\left({p}_{i}-1000\right)\right)mod 4\right) mod {K}_{TC}$ or ${k}_{TC}^{\left({p}_{i}\right)} = \left({\overline{k}}_{TC}+\left(8/x⋅\left({p}_{i}-1000\right)\right)mod x\right) mod {K}_{TC} ,$ wherein
${k}_{TC}^{\left({p}_{i}\right)}$ is a comb position mapped by the port i, *k̅_{TC}* is the comb offset value, and *K*_{TC} is the comb structure size.

4. The port mapping method for sounding reference signals according to claim 1, wherein in a case that the number of ports is 8 and the comb structure size is 8, all eight ports for the first SRS use a same CS; and
the CS corresponding to the each port for the first SRS is obtained through calculation by using the following formula: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max}$ or ${n}_{SRS}^{cs , i} = {n}_{SRS}^{cs} ,$ wherein
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is the port number, ${N}_{ap}^{SRS}$ is the number of ports, and *x* is the first parameter, wherein *x* is a value agreed by default between a network-side device (12) and the terminal (11) and/or a value indicated by the network-side device (12) and/or a value reported by the terminal (11), and *x* equals to 8; wherein
different ports for the first SRS are mapped to different comb positions; and
the comb position mapped by the each port for the first SRS is obtained through calculation by using the following formula: ${k}_{TC}^{\left({p}_{i}\right)} = \left\{\begin{matrix}{\overline{k}}_{TC} & if {p}_{i} ∈ \left\{1000\right\} \\ \left({\overline{k}}_{TC}+1\right) mod {K}_{TC} & if {p}_{i} ∈ \left\{1001\right\} \\ \left({\overline{k}}_{TC}+2\right) mod {K}_{TC} & if {p}_{i} ∈ \left\{1002\right\} \\ \left({\overline{k}}_{TC}+3\right) mod {K}_{TC} & if {p}_{i} ∈ \left\{1003\right\} \\ \left({\overline{k}}_{TC}+4\right) mod {K}_{TC} & if {p}_{i} ∈ \left\{1004\right\} \\ \left({\overline{k}}_{TC}+5\right) mod {K}_{TC} & if {p}_{i} ∈ \left\{1005\right\} \\ \left({\overline{k}}_{TC}+6\right) mod {K}_{TC} & if {p}_{i} ∈ \left\{1006\right\} \\ \left({\overline{k}}_{TC}+7\right) mod {K}_{TC} & if {p}_{i} ∈ \left\{1007\right\}\end{matrix}\right.$ or ${k}_{TC}^{\left({p}_{i}\right)} = \left({\overline{k}}_{TC}+{p}_{i}-1000\right) mod {K}_{TC}$ or ${k}_{TC}^{\left({p}_{i}\right)} = \left({\overline{k}}_{TC}+\left(8/x⋅\left({p}_{i}-1000\right)\right)mod x\right) mod {K}_{TC} ,$ wherein
${k}_{TC}^{\left({p}_{i}\right)}$ is a comb position mapped by the port i, *k̅_{TC}* is the comb offset value, and *K*_{TC} is the comb structure size.

5. The port mapping method for sounding reference signals according to claim 1, wherein in a case that the number of ports is 6 and the comb structure size is 2, different ports for the first SRS use different CSs; and
the CS corresponding to the each port for the first SRS is obtained through calculation by using the following formula: ${n}_{SRS}^{cs , i} = \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} ,$ wherein
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is the port number, and ${N}_{ap}^{SRS}$ is the number of ports; wherein
six ports for the first SRS are divided into two groups, comb positions mapped by ports in a same group are same, and ports in different groups are mapped to different comb positions; and
the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1003, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ wherein
${k}_{TC}^{\left({p}_{i}\right)}$ is a comb position mapped by the port i, *k̅_{TC}* is the comb offset value, and *K*_{TC} is the comb structure size; wherein
in a case that the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1003, 1005\right\} \\ {\overline{k}}_{TC} & otherwise\end{matrix}\right. ,$
a port for a second SRS and ports {1001, 1004} for the first SRS are mapped to a same comb position, and a cyclic shift offset value corresponding to the second SRS is equal to a value obtained by performing remainder calculation on a maximum cyclic shift offset value corresponding to the first SRS after adding 3 to a cyclic shift offset value corresponding to the first SRS;
or,
in a case that the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1004\right\} \\ {\overline{k}}_{TC} & otherwise\end{matrix}\right. ,$
a port for a second SRS and ports {1001, 1004} for the first SRS are mapped to a same comb position, and a cyclic shift offset value corresponding to the second SRS is equal to a value obtained by performing remainder calculation on a maximum cyclic shift offset value corresponding to the first SRS after adding 3 to a cyclic shift offset value corresponding to the first SRS.

6. The port mapping method for sounding reference signals according to claim 1, wherein in a case that the number of ports is 6 and the comb structure size is 2, different ports for the first SRS use different CSs; and
the CS corresponding to the each port for the first SRS is obtained through calculation by using the following formula: ${n}_{SRS}^{cs , i} = \left[{n}_{SRS}^{cs}+\left⌈\frac{{n}_{SRS}^{cs , max} \left({p}_{i}-1000\right)}{{N}_{ap}^{SRS}}\right⌉\right] {modn}_{SRS}^{cs , max} ,$ wherein
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is the port number, and ${N}_{ap}^{SRS}$ is the number of ports; wherein
six ports for the first SRS are divided into two groups, comb positions mapped by ports in a same group are same, and ports in different groups are mapped to different comb positions; and
the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1001, 1003, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1002, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ wherein
${k}_{TC}^{\left({p}_{i}\right)}$ is a comb position mapped by the port i, *k̅_{TC}* is the comb offset value, and *K*_{TC} is the comb structure size; wherein
in a case that the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1001, 1003, 1004\right\} \\ {\overline{k}}_{TC} & otherwise\end{matrix},\right.$
a port for a third SRS and ports {1002, 1005} for the first SRS are mapped to a same comb position, and a cyclic shift offset value corresponding to the third SRS is equal to a value obtained by performing remainder calculation on a maximum cyclic shift offset value corresponding to the first SRS after adding 1 to a cyclic shift offset value corresponding to the first SRS;
or,
in a case that the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1002, 1005\right\} \\ {\overline{k}}_{TC} & otherwise\end{matrix}\right. ,$
a port for a third SRS and ports {1002, 1005} for the first SRS are mapped to a same comb position, and a cyclic shift offset value corresponding to the third SRS is equal to a value obtained by performing remainder calculation on a maximum cyclic shift offset value corresponding to the first SRS after adding 1 to a cyclic shift offset value corresponding to the first SRS.

7. The port mapping method for sounding reference signals according to claim 1, wherein in a case that the number of ports is 6 and the comb structure size is 2, different ports for the first SRS use different CSs; and
the CS corresponding to the each port for the first SRS is obtained through calculation by using the following formula: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] mod {n}_{SRS}^{cs , max} & if {p}_{i} ∈ \left\{1001, 1004\right\} \\ \left[{n}_{SRS}^{cs}+\left⌈\frac{{n}_{SRS}^{cs , max} \left({p}_{i}-1000\right)}{{N}_{ap}^{SRS}}\right⌉\right] mod {n}_{SRS}^{cs , max} & if {p}_{i} ∈ \left\{1002, 1005\right\} \\ \left[{n}_{SRS}^{cs}+\frac{{n}_{SRS}^{cs , max} \left({p}_{i}-1000\right)}{{N}_{ap}^{SRS}}\right] mod {n}_{SRS}^{cs , max} & otherwise\end{matrix}\right. ,$ wherein
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is the port number, and ${N}_{ap}^{SRS}$ is the number of ports; wherein
six ports for the first SRS are divided into two groups, comb positions mapped by ports in a same group are same, and ports in different groups are mapped to different comb positions; and
the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1002, 1004, 1005\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1003\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or, ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ wherein
${k}_{TC}^{\left({p}_{i}\right)}$ is a comb position mapped by the port i, *k̅_{TC}* is the comb offset value, and *K*_{TC} is the comb structure size; wherein
in a case that the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1002, 1004, 1005\right\} \\ {\overline{k}}_{TC} & otherwise\end{matrix}\right. ,$
a port for a fourth SRS and ports { 1000, 1003} for the first SRS are mapped to a same comb position, and a cyclic shift offset value corresponding to the fourth SRS is equal to a value obtained by performing remainder calculation on a maximum cyclic shift offset value corresponding to the first SRS after adding 2 to a cyclic shift offset value corresponding to the first SRS;
or,
in a case that the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1003\right\} \\ {\overline{k}}_{TC} & otherwise\end{matrix}\right. ,$
a port for a fourth SRS and ports { 1000, 1003} for the first SRS are mapped to a same comb position, and a cyclic shift offset value corresponding to the fourth SRS is equal to a value obtained by performing remainder calculation on a maximum cyclic shift offset value corresponding to the first SRS after adding 2 to a cyclic shift offset value corresponding to the first SRS.

8. The port mapping method for sounding reference signals according to claim 1, wherein in a case that the number of ports is 6 and the comb structure size is 2, different ports for the first SRS use different CSs; and
the CS corresponding to the each port for the first SRS is obtained through calculation by using the following formula: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} if {p}_{i} ∈ \left\{1001\right\} \\ \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} if {p}_{i} ∈ \left\{1002, 1004, 1005\right\} \\ \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} otherwise\end{matrix},\right.$ wherein
${n}_{SRS}^{cs , i}$ is a CS corresponding to port i, ${n}_{SRS}^{cs}$ is the cyclic shift offset value, ${n}_{SRS}^{cs , max}$ is the maximum cyclic shift offset value, *pᵢ* is the port number, and ${N}_{ap}^{SRS}$ is the number of ports; wherein
six ports for the first SRS are divided into two groups, comb positions mapped by ports in a same group are same, and ports in different groups are mapped to different comb positions; and
the comb position mapped by the each port for the first SRS is obtained through calculation by using the following formula: ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1000, 1002, 1004\right\} \\ {\overline{k}}_{TC} & otherwise\end{matrix}\right.$ or ${k}_{TC}^{\left({p}_{i}\right)} = \left\{\begin{matrix}\left({\overline{k}}_{TC}+{K}_{TC}/2\right) mod {K}_{TC} & if {p}_{i} ∈ \left\{1001, 1003, 1005\right\} \\ {\overline{k}}_{TC} & otherwise\end{matrix}\right. ,$ wherein
${k}_{TC}^{\left({p}_{i}\right)}$ is a comb position mapped by the port i, *k̅_{TC}* is the comb offset value, and *K*_{TC} is the comb structure size.

9. A terminal (500), comprising a processor (510) and a memory (509), wherein a program or instructions are stored in the memory (509) and executable on the processor (510), and when the program or the instructions are executed by the processor (510), the port mapping method for sounding reference signals according to any one of claims 1 to 8 is implemented.

10. A readable storage medium, wherein the readable storage medium stores a program or instructions, and when the program or the instructions are executed by a processor (510), the port mapping method for sounding reference signals according to any one of claims 1 to 8 is implemented.

## Patentansprüche

1. Ein Portabbildungsverfahren für Sondierungsreferenzsignale (Sounding Reference Signals), das von einem Endgerät durchgeführt wird und Folgendes beinhaltet:
in einem Fall, in dem eine Anzahl von Ports für ein erstes Sondierungsreferenzsignal, SRS, 6 oder 8 beträgt, Bestimmen (200), durch ein Endgerät (11), einer zyklischen Verschiebung, CS, die jedem Port für das erste SRS entspricht, und/oder einer Kammposition, die von dem jeden Port für das erste SRS abgebildet wird; wobei eine Kammstrukturgröße des ersten SRS N beträgt und N 2, 4, 6 oder 8 beträgt;
sowohl die CS, die jedem Port für das erste SRS entspricht, als auch die Kammposition, die von dem jeden Port für das erste SRS abgebildet wird, zur SRS-Übertragung verwendet werden; wobei die CS, die dem jeden Port für das erste SRS entspricht, auf der Basis von mindestens einem von einem Versatzwert der zyklischen Verschiebung, einem maximalen Versatzwert der zyklischen Verschiebung, einem ersten Parameter, einer Kammstrukturgröße, einer Portnummer und der Anzahl von Ports bestimmt wird; und/oder eine Kammposition, die von dem jeden Port für das erste SRS abgebildet wird, auf der Basis von mindestens einem von einem Kammversatzwert, der Kammstrukturgröße, dem Versatzwert der zyklischen Verschiebung, dem maximalen Versatzwert der zyklischen Verschiebung, dem ersten Parameter und der Portnummer bestimmt wird;
in einem Fall, in dem die Anzahl von Ports 8 beträgt und die Kammstrukturgröße 2 beträgt, verschiedene Ports für das erste SRS verschiedenen CS entsprechen und die CS, die dem jeden Port für das erste SRS entspricht, durch Berechnung unter Verwendung der folgenden Formel erhalten wird: ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ wobei
${n}_{SRS}^{cs , i}$ eine CS ist, die Port i entspricht, ${n}_{SRS}^{cs}$ der Versatzwert der zyklischen Verschiebung ist, ${n}_{SRS}^{cs , max}$ der maximale Versatzwert der zyklischen Verschiebung ist, *pᵢ* die Portnummer ist und ${N}_{ap}^{SRS}$ die Anzahl von Ports ist;
**dadurch gekennzeichnet, dass**
die Kammposition, die von dem jeden Port für das erste SRS abgebildet wird, mit dem Versatzwert der zyklischen Verschiebung in Beziehung steht; und für einen spezifischen Versatzwert der zyklischen Verschiebung acht Ports für das erste SRS in zwei Gruppen unterteilt sind, Kammpositionen, die von Ports in einer gleichen Gruppe abgebildet werden, gleich sind und Ports in verschiedenen Gruppen auf verschiedene Kammpositionen abgebildet werden; und
die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {n}_{SRS}^{cs} ∈ \left\{{n}_{SRS}^{cs , max}/2,…,{n}_{SRS}^{cs , max}-1\right\} und {p}_{i} ∈ \left\{1001, 1003, 1005, 1007\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {n}_{SRS}^{cs} ∈ \left\{{n}_{SRS}^{cs , max}/2,…,{n}_{SRS}^{cs , max}-1\right\} und {p}_{i} ∈ \left\{1000, 1002, 1004, 1006\right\} \\ {\overline{k}}_{TC} & andernfalls\end{matrix}\right. ,$
wobei
${k}_{TC}^{\left({p}_{i}\right)}$ eine Kammposition ist, die von dem Port i abgebildet wird, *k̅_{TC}* der Kammversatzwert ist und *K*_{TC} die Kammstrukturgröße ist in einem Fall, in dem die Anzahl von Ports 8 beträgt und die Kammstrukturgröße 4 beträgt, acht Ports für das erste SRS in vier Gruppen unterteilt sind, Ports in einer gleichen Gruppe eine gleiche CS verwenden und Ports in verschiedenen Gruppen verschiedene CS verwenden; und:
die CS, die dem jeden Port für das erste SRS entspricht, durch Berechnung unter Verwendung der folgenden Formel erhalten wird: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ wobei
${n}_{SRS}^{cs , i}$ eine CS ist, die Port i entspricht, ${n}_{SRS}^{cs}$ der Versatzwert der zyklischen Verschiebung ist, ${n}_{SRS}^{cs , max}$ der maximale Versatzwert der zyklischen Verschiebung ist, *pᵢ* die Portnummer ist, ${N}_{ap}^{SRS}$ die Anzahl von Ports ist und *x* der erste Parameter ist,
wobei *x* ein standardmäßig zwischen einer netzwerkseitigen Vorrichtung (12) und dem Endgerät (11) vereinbarter Wert und/oder ein von der netzwerkseitigen Vorrichtung (12) angegebener Wert und/oder ein von dem Endgerät (11) gemeldeter Wert ist und *x* gleich 2 ist; und
in einem Fall, in dem die Anzahl von Ports 8 beträgt und die Kammstrukturgröße 8 beträgt, acht Ports für das erste SRS in zwei Gruppen unterteilt sind, Ports in einer gleichen Gruppe eine gleiche CS verwenden und Ports in verschiedenen Gruppen verschiedene CS verwenden; und
die CS, die dem jeden Port für das erste SRS entspricht, durch Berechnung unter Verwendung der folgenden Formel erhalten wird: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ wobei
${n}_{SRS}^{cs , i}$ eine CS ist, die Port i entspricht, ${n}_{SRS}^{cs}$ der Versatzwert der zyklischen Verschiebung ist, ${n}_{SRS}^{cs , max}$ der maximale Versatzwert der zyklischen Verschiebung ist, *pᵢ* die Portnummer ist, ${N}_{ap}^{SRS}$ die Anzahl von Ports ist und *x* der erste Parameter ist,
wobei *x* ein standardmäßig zwischen einer netzwerkseitigen Vorrichtung (12) und dem Endgerät (11) vereinbarter Wert und/oder ein von der netzwerkseitigen Vorrichtung (12) angegebener Wert und/oder ein von dem Endgerät (11) gemeldeter Wert ist und *x* gleich 4 ist.

2. Portabbildungsverfahren für Sondierungsreferenzsignale gemäß Anspruch 1, wobei die acht Ports für das erste SRS in zwei Gruppen unterteilt sind, Kammpositionen, die von Ports in einer gleichen Gruppe abgebildet werden, gleich sind und Ports in verschiedenen Gruppen auf verschiedene Kammpositionen abgebildet werden; und die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1001, 1003, 1005, 1007\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1002, 1004, 1006\right\} \\ {\overline{k}}_{TC} & andernfalls\end{matrix},\right.$ wobei ${k}_{TC}^{\left({p}_{i}\right)}$
eine Kammposition ist, die von dem Port i abgebildet wird, *k̅_{TC}* der Kammversatzwert ist und *K*_{TC} die Kammstrukturgröße ist.

3. Portabbildungsverfahren für Sondierungsreferenzsignale gemäß Anspruch 1, wobei die acht Ports für das erste SRS in vier Gruppen unterteilt sind, Kammpositionen, die von Ports in einer gleichen Gruppe abgebildet werden, gleich sind und Ports in verschiedenen Gruppen auf verschiedene Kammpositionen abgebildet werden; und die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}{\overline{k}}_{TC} & wenn {p}_{i} ∈ \left\{1000, 1004\right\} \\ \left({\overline{k}}_{TC}+2\right) mod {K}_{TC} & wenn {p}_{i} ∈ \left\{1001, 1005\right\} \\ \left({\overline{k}}_{TC}+4\right) mod {K}_{TC} & wenn {p}_{i} ∈ \left\{1002, 1006\right\} \\ \left({\overline{k}}_{TC}+6\right) mod {K}_{TC} & wenn {p}_{i} ∈ \left\{1003, 1007\right\}\end{matrix}\right.$ oder ${k}_{TC}^{\left({p}_{i}\right)} = \left({\overline{k}}_{TC}+\left(2\left({p}_{i}-1000\right)\right)mod 4\right) mod {K}_{TC}$ oder ${k}_{TC}^{\left({p}_{i}\right)} = \left({\overline{k}}_{TC}+\left(8/x⋅\left({p}_{i}-1000\right)\right)mod x\right) mod {K}_{TC} ,$ wobei
${k}_{TC}^{\left({p}_{i}\right)}$ eine Kammposition ist, die von dem Port i abgebildet wird, *k̅_{TC}* der Kammversatzwert ist und *K*_{TC} die Kammstrukturgröße ist.

4. Portabbildungsverfahren für Sondierungsreferenzsignale gemäß Anspruch 1, wobei in einem Fall, in dem die Anzahl von Ports 8 beträgt und die Kammstrukturgröße 8 beträgt, alle acht Ports für das erste SRS eine gleiche CS verwenden; und
die CS, die dem jeden Port für das erste SRS entspricht, durch Berechnung unter Verwendung der folgenden Formel erhalten wird: ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max}$ oder ${n}_{SRS}^{cs , i} = {n}_{SRS}^{cs} ,$ wobei
${n}_{SRS}^{cs , i}$ eine CS ist, die Port i entspricht, ${n}_{SRS}^{cs}$ der Versatzwert der zyklischen Verschiebung ist, ${n}_{SRS}^{cs , max}$ der maximale Versatzwert der zyklischen Verschiebung ist, *pᵢ* die Portnummer ist, ${N}_{ap}^{SRS}$ die Anzahl von Ports ist und *x* der erste Parameter ist,
wobei *x* ein standardmäßig zwischen einer netzwerkseitigen Vorrichtung (12) und dem Endgerät (11) vereinbarter Wert und/oder ein von der netzwerkseitigen Vorrichtung (12) angegebener Wert und/oder ein von dem Endgerät (11) gemeldeter Wert ist und *x* gleich 8 ist; wobei
verschiedene Ports für das erste SRS auf verschiedene Kammpositionen abgebildet werden; und
die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}{\overline{k}}_{TC} & wenn {p}_{i} ∈ \left\{1000\right\} \\ \left({\overline{k}}_{TC}+1\right) mod {K}_{TC} & wenn {p}_{i} ∈ \left\{1001\right\} \\ \left({\overline{k}}_{TC}+2\right) mod {K}_{TC} & wenn {p}_{i} ∈ \left\{1002\right\} \\ \left({\overline{k}}_{TC}+3\right) mod {K}_{TC} & wenn {p}_{i} ∈ \left\{1003\right\} \\ \left({\overline{k}}_{TC}+4\right) mod {K}_{TC} & wenn {p}_{i} ∈ \left\{1004\right\} \\ \left({\overline{k}}_{TC}+5\right) mod {K}_{TC} & wenn {p}_{i} ∈ \left\{1005\right\} \\ \left({\overline{k}}_{TC}+6\right) mod {K}_{TC} & wenn {p}_{i} ∈ \left\{1006\right\} \\ \left({\overline{k}}_{TC}+7\right) mod {K}_{TC} & wenn {p}_{i} ∈ \left\{1007\right\}\end{matrix}\right.$ oder ${k}_{TC}^{\left({p}_{i}\right)} = \left({\overline{k}}_{TC}+{p}_{i}-1000\right) mod {K}_{TC}$ oder ${k}_{TC}^{\left({p}_{i}\right)} = \left({\overline{k}}_{TC}+\left(8/x⋅\left({p}_{i}-1000\right)\right)mod x\right) mod {K}_{TC} ,$ wobei
${k}_{TC}^{\left({p}_{i}\right)}$ eine Kammposition ist, die von dem Port i abgebildet wird, *k̅_{TC}* der Kammversatzwert ist und *K*_{TC} die Kammstrukturgröße ist.

5. Portabbildungsverfahren für Sondierungsreferenzsignale gemäß Anspruch 1, wobei in einem Fall, in dem die Anzahl von Ports 6 beträgt und die Kammstrukturgröße 2 beträgt, verschiedene Ports für das erste SRS verschiedene CS verwenden; und
die CS, die dem jeden Port für das erste SRS entspricht, durch Berechnung unter Verwendung der folgenden Formel erhalten wird: ${n}_{SRS}^{cs , i} = \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} ,$ wobei
${n}_{SRS}^{cs , i}$ eine CS ist, die Port i entspricht, ${n}_{SRS}^{cs}$ der Versatzwert der zyklischen Verschiebung ist, ${n}_{SRS}^{cs , max}$ der maximale Versatzwert der zyklischen Verschiebung ist, *pᵢ* die Portnummer ist und ${N}_{ap}^{SRS}$ die Anzahl von Ports ist; wobei
sechs Ports für das erste SRS in zwei Gruppen unterteilt sind, Kammpositionen, die von Ports in einer gleichen Gruppe abgebildet werden, gleich sind und Ports in verschiedenen Gruppen auf verschiedene Kammpositionen abgebildet werden; und die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1002, 1003, 1005\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1001, 1004\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1002, 1004\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1001, 1003, 1005\right\} \\ {\overline{k}}_{TC} & andernfalls\end{matrix}\right. ,$ wobei
${k}_{TC}^{\left({p}_{i}\right)}$ eine Kammposition ist, die von dem Port i abgebildet wird, *k̅_{TC}* der Kammversatzwert ist und *K*_{TC} die Kammstrukturgröße ist; wobei in einem Fall, in dem die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1002, 1003, 1005\right\} \\ {\overline{k}}_{TC} & andernfalls\end{matrix}\right. ,$
ein Port für ein zweites SRS und Ports {1001, 1004} für das erste SRS auf eine gleiche Kammposition abgebildet werden und ein Versatzwert der zyklischen Verschiebung, der dem zweiten SRS entspricht, gleich einem Wert ist, der durch Durchführen von Restberechnung an einem maximalen Versatzwert der zyklischen Verschiebung, der dem ersten SRS entspricht, nach Addieren von 3 zu einem Versatzwert der zyklischen Verschiebung, der dem ersten SRS entspricht, erhalten wird;
oder
in einem Fall, in dem die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1004\right\} \\ {\overline{k}}_{TC} & andernfalls\end{matrix}\right. ,$
ein Port für ein zweites SRS und Ports {1001, 1004} für das erste SRS auf eine gleiche Kammposition abgebildet werden und ein Versatzwert der zyklischen Verschiebung, der dem zweiten SRS entspricht, gleich einem Wert ist, der durch Durchführen von Restberechnung an einem maximalen Versatzwert der zyklischen Verschiebung, der dem ersten SRS entspricht, nach Addieren von 3 zu einem Versatzwert der zyklischen Verschiebung, der dem ersten SRS entspricht, erhalten wird.

6. Portabbildungsverfahren für Sondierungsreferenzsignale gemäß Anspruch 1, wobei in einem Fall, in dem die Anzahl von Ports 6 beträgt und die Kammstrukturgröße 2 beträgt, verschiedene Ports für das erste SRS verschiedene CS verwenden; und
die CS, die dem jeden Port für das erste SRS entspricht, durch Berechnung unter Verwendung der folgenden Formel erhalten wird: ${n}_{SRS}^{cs , i} = \left[{n}_{SRS}^{cs}+\left⌈\frac{{n}_{SRS}^{cs , max} \left({p}_{i}-1000\right)}{{N}_{ap}^{SRS}}\right⌉\right] {modn}_{SRS}^{cs , max} ,$ wobei
${n}_{SRS}^{cs , i}$ eine CS ist, die Port i entspricht, ${n}_{SRS}^{cs}$ der Versatzwert der zyklischen Verschiebung ist, ${n}_{SRS}^{cs , max}$ der maximale Versatzwert der zyklischen Verschiebung ist, *pᵢ* die Portnummer ist und ${N}_{ap}^{SRS}$ die Anzahl von Ports ist; wobei
sechs Ports für das erste SRS in zwei Gruppen unterteilt sind, Kammpositionen, die von Ports in einer gleichen Gruppe abgebildet werden, gleich sind und Ports in verschiedenen Gruppen auf verschiedene Kammpositionen abgebildet werden; und die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1001, 1003, 1004\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1002, 1005\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1002, 1004\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1001, 1003, 1005\right\} \\ {\overline{k}}_{TC} & andernfalls\end{matrix}\right. ,$ wobei
${k}_{TC}^{\left({p}_{i}\right)}$ eine Kammposition ist, die von dem Port i abgebildet wird, *k̅_{TC}* der Kammversatzwert ist und *K*_{TC} die Kammstrukturgröße ist; wobei
in einem Fall, in dem die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1001, 1003, 1004\right\} \\ {\overline{k}}_{TC} & andernfalls\end{matrix}\right. ,$
ein Port für ein drittes SRS und Ports {1002, 1005} für das erste SRS auf eine gleiche Kammposition abgebildet werden und ein Versatzwert der zyklischen Verschiebung, der dem dritten SRS entspricht, gleich einem Wert ist, der durch Durchführen von Restberechnung an einem maximalen Versatzwert der zyklischen Verschiebung, der dem ersten SRS entspricht, nach Addieren von 1 zu einem Versatzwert der zyklischen Verschiebung, der dem ersten SRS entspricht, erhalten wird;
oder
in einem Fall, in dem die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1002, 1005\right\} \\ {\overline{k}}_{TC} & andernfalls\end{matrix}\right. ,$
ein Port für ein drittes SRS und Ports {1002, 1005} für das erste SRS auf eine gleiche Kammposition abgebildet werden und ein Versatzwert der zyklischen Verschiebung, der dem dritten SRS entspricht, gleich einem Wert ist, der durch Durchführen von Restberechnung an einem maximalen Versatzwert der zyklischen Verschiebung, der dem ersten SRS entspricht, nach Addieren von 1 zu einem Versatzwert der zyklischen Verschiebung, der dem ersten SRS entspricht, erhalten wird.

7. Portabbildungsverfahren für Sondierungsreferenzsignale gemäß Anspruch 1, wobei in einem Fall, in dem die Anzahl von Ports 6 beträgt und die Kammstrukturgröße 2 beträgt, verschiedene Ports für das erste SRS verschiedene CS verwenden; und
die CS, die dem jeden Port für das erste SRS entspricht, durch Berechnung unter Verwendung der folgenden Formel erhalten wird: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] mod {n}_{SRS}^{cs , max} & wenn {p}_{i} ∈ \left\{1001, 1004\right\} \\ \left[{n}_{SRS}^{cs}+\left⌈\frac{{n}_{SRS}^{cs , max} \left({p}_{i}-1000\right)}{{N}_{ap}^{SRS}}\right⌉\right] mod {n}_{SRS}^{cs , max} & wenn {p}_{i} ∈ \left\{1002, 1005\right\} \\ \left[{n}_{SRS}^{cs}+\frac{{n}_{SRS}^{cs , max} \left({p}_{i}-1000\right)}{{N}_{ap}^{SRS}}\right] mod {n}_{SRS}^{cs , max} & andernfalls\end{matrix}\right. ,$ wobei
${n}_{SRS}^{cs , i}$ eine CS ist, die Port i entspricht, ${n}_{SRS}^{cs}$ der Versatzwert der zyklischen Verschiebung ist, ${n}_{SRS}^{cs , max}$ der maximale Versatzwert der zyklischen Verschiebung ist, *pᵢ* die Portnummer ist und ${N}_{ap}^{SRS}$ die Anzahl von Ports ist; wobei
sechs Ports für das erste SRS in zwei Gruppen unterteilt sind, Kammpositionen, die von Ports in einer gleichen Gruppe abgebildet werden, gleich sind und Ports in verschiedenen Gruppen auf verschiedene Kammpositionen abgebildet werden; und die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1001, 1002, 1004, 1005\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1003\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1002, 1004\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1001, 1003, 1005\right\} \\ {\overline{k}}_{TC} & andernfalls\end{matrix},\right.$ wobei
${k}_{TC}^{\left({p}_{i}\right)}$ eine Kammposition ist, die von dem Port i abgebildet wird, *k̅_{TC}* der Kammversatzwert ist und *K*_{TC} die Kammstrukturgröße ist; wobei
in einem Fall, in dem die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1001, 1002, 1004, 1005\right\} \\ {\overline{k}}_{TC} & andernfalls\end{matrix}\right. ,$
ein Port für ein viertes SRS und Ports {1000, 1003} für das erste SRS auf eine gleiche Kammposition abgebildet werden und ein Versatzwert der zyklischen Verschiebung, der dem vierten SRS entspricht, gleich einem Wert ist, der durch Durchführen von Restberechnung an einem maximalen Versatzwert der zyklischen Verschiebung, der dem ersten SRS entspricht, nach Addieren von 2 zu einem Versatzwert der zyklischen Verschiebung, der dem ersten SRS entspricht, erhalten wird;
oder
in einem Fall, in dem die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1003\right\} \\ {\overline{k}}_{TC} & andernfalls\end{matrix}\right. ,$
ein Port für ein viertes SRS und Ports {1000, 1003} für das erste SRS auf eine gleiche Kammposition abgebildet werden und ein Versatzwert der zyklischen Verschiebung, der dem vierten SRS entspricht, gleich einem Wert ist, der durch Durchführen von Restberechnung an einem maximalen Versatzwert der zyklischen Verschiebung, der dem ersten SRS entspricht, nach Addieren von 2 zu einem Versatzwert der zyklischen Verschiebung, der dem ersten SRS entspricht, erhalten wird.

8. Portabbildungsverfahren für Sondierungsreferenzsignale gemäß Anspruch 1, wobei in einem Fall, in dem die Anzahl von Ports 6 beträgt und die Kammstrukturgröße 2 beträgt, verschiedene Ports für das erste SRS verschiedene CS verwenden; und
die CS, die dem jeden Port für das erste SRS entspricht, durch Berechnung unter Verwendung der folgenden Formel erhalten wird: ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , {max}_{wenn}} {p}_{i} ∈ \left\{1001\right\} \\ \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , {max}_{wenn}} {p}_{i} ∈ \left\{1002, 1004, 1005\right\} \\ \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} andernfalls\end{matrix},\right.$ wobei
${n}_{SRS}^{cs , i}$ eine CS ist, die Port i entspricht, ${n}_{SRS}^{cs}$ der Versatzwert der zyklischen Verschiebung ist, ${n}_{SRS}^{cs , max}$ der maximale Versatzwert der zyklischen Verschiebung ist, *pᵢ* die Portnummer ist und ${N}_{ap}^{SRS}$ die Anzahl von Ports ist; wobei
sechs Ports für das erste SRS in zwei Gruppen unterteilt sind, Kammpositionen, die von Ports in einer gleichen Gruppe abgebildet werden, gleich sind und Ports in verschiedenen Gruppen auf verschiedene Kammpositionen abgebildet werden; und
die Kammposition, die von dem jeden Port für das erste SRS abgebildet wird, durch Berechnung unter Verwendung der folgenden Formel erhalten wird: ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1000, 1002, 1004\right\} \\ {\overline{k}}_{TC} & andernfalls\end{matrix}\right.$ oder ${k}_{TC}^{\left({p}_{i}\right)} = \left\{\begin{matrix}\left({\overline{k}}_{TC}+{K}_{TC}/2\right) mod {K}_{TC} & wenn {p}_{i} ∈ \left\{1001, 1003, 1005\right\} \\ {\overline{k}}_{TC} & andernfalls\end{matrix}\right. ,$ wobei
${k}_{TC}^{\left({p}_{i}\right)}$ eine Kammposition ist, die von dem Port i abgebildet wird, *k̅_{TC}* der Kammversatzwert ist und *K*_{TC} die Kammstrukturgröße ist.

9. Ein Endgerät (500), das einen Prozessor (510) und einen Speicher (509) beinhaltet, wobei ein Programm oder Anweisungen in dem Speicher (509) gespeichert und auf dem Prozessor (510) ausführbar sind, und wenn das Programm oder die Anweisungen von dem Prozessor (510) ausgeführt werden, das Portabbildungsverfahren für Sondierungsreferenzsignale gemäß einem der Ansprüche 1 bis 8 implementiert wird.

10. Ein lesbares Speichermedium, wobei das lesbare Speichermedium ein Programm oder Anweisungen speichert, und wenn das Programm oder die Anweisungen von einem Prozessor (510) ausgeführt werden, das Portabbildungsverfahren für Sondierungsreferenzsignale gemäß einem der Ansprüche 1 bis 8 implementiert wird.

## Revendications

1. Un procédé de mappage de port pour des signaux de référence de sondage, réalisé par un terminal, comprenant :
dans un cas où un nombre de ports pour un premier signal de référence de sondage, SRS, est de 6 ou de 8, la détermination (200), par un terminal (11), d'un décalage cyclique, CS, correspondant à chaque port pour le premier SRS et/ou d'une position de peigne mappée par chaque port pour le premier SRS ; où
une taille de structure de peigne du premier SRS est N, et N est 2, 4, 6, ou 8 ;
le CS correspondant à chaque port pour le premier SRS et la position de peigne mappée par chaque port pour le premier SRS sont tous deux utilisés pour une transmission de SRS ; où le CS correspondant à chaque port pour le premier SRS est déterminé sur la base d'au moins un élément parmi une valeur d'offset de décalage cyclique, une valeur d'offset de décalage cyclique maximale, un premier paramètre, une taille de structure de peigne, un numéro de port, et le nombre de ports ; et/ou une position de peigne mappée par chaque port pour le premier SRS est déterminée sur la base d'au moins un élément parmi une valeur d'offset de peigne, la taille de structure de peigne, la valeur d'offset de décalage cyclique, la valeur d'offset de décalage cyclique maximale, le premier paramètre, et le numéro de port ;
dans un cas où le nombre de ports est de 8 et la taille de structure de peigne est de 2, des ports différents pour le premier SRS correspondent à des CS différents, et le CS correspondant à chaque port pour le premier SRS est obtenu par calcul en utilisant la formule suivante : ${n}_{SRS}^{cs , i} = \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} ,$ où
${n}_{SRS}^{cs , i}$ est un CS correspondant au port i, ${n}_{SRS}^{cs}$ est la valeur d'offset de décalage cyclique, ${n}_{SRS}^{cs , max}$ est la valeur d'offset de décalage cyclique maximale, *pᵢ* est le numéro de port, et ${N}_{ap}^{SRS}$ est le nombre de ports ;
**caractérisé en ce que**
la position de peigne mappée par chaque port pour le premier SRS est liée à la valeur d'offset de décalage cyclique ; et pour une valeur d'offset de décalage cyclique spécifique, huit ports pour le premier SRS sont divisés en deux groupes, des positions de peigne mappées par des ports dans un même groupe sont les mêmes, et des ports dans des groupes différents sont mappés à des positions de peigne différentes ; et
la position de peigne mappée par chaque port pour le premier SRS est obtenue par calcul en utilisant la formule suivante : ${k}_{TC}^{\left({p}_{t}\right)} = \left\{\begin{matrix}\left({\overline{k}}_{TC}+{K}_{TC}/2\right) mod {K}_{TC} & si {n}_{SRS}^{cs} ∈ \left\{{n}_{SRS}^{cs , max}/2,…,{n}_{SRS}^{cs , max}-1\right\} et {p}_{i} ∈ \left\{1001, 1003, 1005, 1007\right\} \\ {\overline{k}}_{TC} & sinon\end{matrix}\right.$ ou ${k}_{TC}^{\left({p}_{i}\right)} = \left\{\begin{matrix}\left({\overline{k}}_{TC}+{K}_{TC}/2\right) mod {K}_{TC} & si {n}_{SRS}^{cs} ∈ \left\{{n}_{SRS}^{cs , max}/2,…,{n}_{SRS}^{cs , max}-1\right\} et {p}_{i} ∈ \left\{1000, 1002, 1004, 1006\right\} \\ {\overline{k}}_{TC} & sinon\end{matrix},\right.$ où
${k}_{TC}^{\left({p}_{i}\right)}$ est une position de peigne mappée par le port i, *k̅_{TC}* est la valeur d'offset de peigne, et *K*_{TC} est la taille de structure de peigne dans un cas où le nombre de ports est de 8 et la taille de structure de peigne est de 4, huit ports pour le premier SRS sont divisés en quatre groupes, des ports dans un même groupe utilisent un même CS, et des ports dans des groupes différents utilisent des CS différents ; et :
le CS correspondant à chaque port pour le premier SRS est obtenu par calcul en utilisant la formule suivante : ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ où
${n}_{SRS}^{cs , i}$ est un CS correspondant au port i, ${n}_{SRS}^{cs}$ est la valeur d'offset de décalage cyclique, ${n}_{SRS}^{cs , max}$ est la valeur d'offset de décalage cyclique maximale, *pᵢ* est le numéro de port, ${N}_{ap}^{SRS}$ est le nombre de ports, et *x* est le premier paramètre, où *x* est une valeur convenue par défaut entre un dispositif côté réseau (12) et le terminal (11) et/ou une valeur indiquée par le dispositif côté réseau (12) et/ou une valeur rapportée par le terminal (11), et *x* est égal à 2 ; et
dans un cas où le nombre de ports est de 8 et la taille de structure de peigne est de 8, huit ports pour le premier SRS sont divisés en deux groupes, des ports dans un même groupe utilisent un même CS, et des ports dans des groupes différents utilisent des CS différents ; et
le CS correspondant à chaque port pour le premier SRS est obtenu par calcul en utilisant la formule suivante : ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max} ,$ où
${n}_{SRS}^{cs , i}$ est un CS correspondant au port i, ${n}_{SRS}^{cs}$ est la valeur d'offset de décalage cyclique, ${n}_{SRS}^{cs , max}$ est la valeur d'offset de décalage cyclique maximale, *pᵢ* est le numéro de port, ${N}_{ap}^{SRS}$ est le nombre de ports, et *x* est le premier paramètre, où *x* est une valeur convenue par défaut entre un dispositif côté réseau (12) et le terminal (11) et/ou une valeur indiquée par le dispositif côté réseau (12) et/ou une valeur rapportée par le terminal (11), et x est égal à 4.

2. Le procédé de mappage de port pour des signaux de référence de sondage selon la revendication 1, où les huit ports pour le premier SRS sont divisés en deux groupes, des positions de peigne mappées par des ports dans un même groupe sont les mêmes, et des ports dans des groupes différents sont mappés à des positions de peigne différentes ; et
la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1003, 1005, 1007\right\} \\ {\overline{k}}_{TC} & sinon\end{matrix}\right.$ ou ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1002, 1004, 1006\right\} \\ {\overline{k}}_{TC} & sinon\end{matrix},\right.$ où
${k}_{TC}^{\left({p}_{i}\right)}$ est une position de peigne mappée par le port i, *k̅_{TC}* est la valeur d'offset de peigne, et *K*_{TC} est la taille de structure de peigne.

3. Le procédé de mappage de port pour des signaux de référence de sondage selon la revendication 1, où les huit ports pour le premier SRS sont divisés en quatre groupes, des positions de peigne mappées par des ports dans un même groupe sont les mêmes, et des ports dans des groupes différents sont mappés à des positions de peigne différentes ; et
la position de peigne mappée par chaque port pour le premier SRS est obtenue par calcul en utilisant la formule suivante : ${k}_{TC}^{\left({p}_{i}\right)} = \left\{\begin{matrix}{\overline{k}}_{TC} & si {p}_{i} ∈ \left\{1000, 1004\right\} \\ \left({\overline{k}}_{TC}+2\right) mod {K}_{TC} & si {p}_{i} ∈ \left\{1001, 1005\right\} \\ \left({\overline{k}}_{TC}+4\right) mod {K}_{TC} & si {p}_{i} ∈ \left\{1002, 1006\right\} \\ \left({\overline{k}}_{TC}+6\right) mod {K}_{TC} & si {p}_{i} ∈ \left\{1003, 1007\right\}\end{matrix}\right.$ ou ${k}_{TC}^{\left({p}_{i}\right)} = \left({\overline{k}}_{TC}+\left(2\left({p}_{i}-1000\right)\right)mod 4\right) mod {K}_{TC}$ ou ${k}_{TC}^{\left({p}_{i}\right)} = \left({\overline{k}}_{TC}+\left(8/x⋅\left({p}_{i}-1000\right)\right)mod x\right) mod {K}_{TC} ,$ où
${k}_{TC}^{\left({p}_{i}\right)}$ est une position de peigne mappée par le port i, *k̅_{TC}* est la valeur d'offset de peigne, et *K*_{TC} est la taille de structure de peigne.

4. Le procédé de mappage de port pour des signaux de référence de sondage selon la revendication 1, où, dans un cas où le nombre de ports est de 8 et la taille de structure de peigne est de 8, les huit ports pour le premier SRS utilisent tous un même CS ; et le CS correspondant à chaque port pour le premier SRS est obtenu par calcul en utilisant la formule suivante : ${n}_{SRS}^{cs , i} = \left[{n}_{SRS}^{cs}+\frac{{n}_{SRS}^{cs , max} ⋅ \left⌊\left({p}_{i}-1000\right)/x\right⌋ ⋅ x}{{N}_{ap}^{SRS}}\right] {modn}_{SRS}^{cs , max}$ ou ${n}_{SRS}^{cs , i} = {n}_{SRS}^{cs} ,$ où
${n}_{SRS}^{cs , i}$ est un CS correspondant au port i, ${n}_{SRS}^{cs}$ est la valeur d'offset de décalage cyclique, ${n}_{SRS}^{cs , max}$ est la valeur d'offset de décalage cyclique maximale, *pᵢ* est le numéro de port, ${N}_{ap}^{SRS}$ est le nombre de ports, et *x* est le premier paramètre, où *x* est une valeur convenue par défaut entre un dispositif côté réseau (12) et le terminal (11) et/ou une valeur indiquée par le dispositif côté réseau (12) et/ou une valeur rapportée par le terminal (11), et *x* est égal à 8 ; où
des ports différents pour le premier SRS sont mappés à des positions de peigne différentes ; et
la position de peigne mappée par chaque port pour le premier SRS est obtenue par calcul en utilisant la formule suivante : ${k}_{TC}^{\left({p}_{i}\right)} = \left\{\begin{matrix}{\overline{k}}_{TC} & si {p}_{i} ∈ \left\{1000\right\} \\ \left({\overline{k}}_{TC}+1\right) mod {K}_{TC} & si {p}_{i} ∈ \left\{1001\right\} \\ \left({\overline{k}}_{TC}+2\right) mod {K}_{TC} & si {p}_{i} ∈ \left\{1002\right\} \\ \left({\overline{k}}_{TC}+3\right) mod {K}_{TC} & si {p}_{i} ∈ \left\{1003\right\} \\ \left({\overline{k}}_{TC}+4\right) mod {K}_{TC} & si {p}_{i} ∈ \left\{1004\right\} \\ \left({\overline{k}}_{TC}+5\right) mod {K}_{TC} & si {p}_{i} ∈ \left\{1005\right\} \\ \left({\overline{k}}_{TC}+6\right) mod {K}_{TC} & si {p}_{i} ∈ \left\{1006\right\} \\ \left({\overline{k}}_{TC}+7\right) mod {K}_{TC} & si {p}_{i} ∈ \left\{1007\right\}\end{matrix}\right.$ ou ${k}_{TC}^{\left({p}_{i}\right)} = \left({\overline{k}}_{TC}+{p}_{i}-1000\right) mod {K}_{TC}$ ou ${k}_{TC}^{\left({p}_{i}\right)} = \left({\overline{k}}_{TC}+\left(8/x⋅\left({p}_{i}-1000\right)\right)mod x\right) mod {K}_{TC} ,$ où
${k}_{TC}^{\left({p}_{i}\right)}$ est une position de peigne mappée par le port i, *k̅_{TC}* est la valeur d'offset de peigne, et *K*_{TC} est la taille de structure de peigne.

5. Le procédé de mappage de port pour des signaux de référence de sondage selon la revendication 1, où, dans un cas où le nombre de ports est de 6 et la taille de structure de peigne est de 2, des ports différents pour le premier SRS utilisent des CS différents ; et
le CS correspondant à chaque port pour le premier SRS est obtenu par calcul en utilisant la formule suivante : ${n}_{SRS}^{cs , i} = \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} ,$ où
${n}_{SRS}^{cs , i}$ est un CS correspondant au port i, ${n}_{SRS}^{cs}$ est la valeur d'offset de décalage cyclique, ${n}_{SRS}^{cs , max}$ est la valeur d'offset de décalage cyclique maximale, *pᵢ* est le numéro de port, et ${N}_{ap}^{SRS}$ est le nombre de ports ; où
six ports pour le premier SRS sont divisés en deux groupes, des positions de peigne mappées par des ports dans un même groupe sont les mêmes, et des ports dans des groupes différents sont mappés à des positions de peigne différentes ; et
la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1002, 1003, 1005\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1004\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1002, 1004\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1003, 1005\right\} \\ {\overline{k}}_{TC} & sinon\end{matrix}\right. , où$
${k}_{TC}^{\left({p}_{i}\right)}$ est une position de peigne mappée par le port i, *k̅_{TC}* est la valeur d'offset de peigne, et *K*_{TC} est la taille de structure de peigne ; où
dans un cas où la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1002, 1003, 1005\right\} \\ {\overline{k}}_{TC} & sinon\end{matrix},\right.$
un port pour un deuxième SRS et des ports {1001, 1004} pour le premier SRS sont mappés à une même position de peigne, et une valeur d'offset de décalage cyclique correspondant au deuxième SRS est égale à une valeur obtenue en réalisant un calcul de reste sur une valeur d'offset de décalage cyclique maximale correspondant au premier SRS après avoir ajouté 3 à une valeur d'offset de décalage cyclique correspondant au premier SRS ;
ou,
dans un cas où la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1004\right\} \\ {\overline{k}}_{TC} & sinon\end{matrix}\right. ,$
un port pour un deuxième SRS et des ports {1001, 1004} pour le premier SRS sont mappés à une même position de peigne, et une valeur d'offset de décalage cyclique correspondant au deuxième SRS est égale à une valeur obtenue en réalisant un calcul de reste sur une valeur d'offset de décalage cyclique maximale correspondant au premier SRS après avoir ajouté 3 à une valeur d'offset de décalage cyclique correspondant au premier SRS.

6. Le procédé de mappage de port pour des signaux de référence de sondage selon la revendication 1, où, dans un cas où le nombre de ports est de 6 et la taille de structure de peigne est de 2, des ports différents pour le premier SRS utilisent des CS différents ; et
le CS correspondant à chaque port pour le premier SRS est obtenu par calcul en utilisant la formule suivante : ${n}_{SRS}^{cs , i} = \left[{n}_{SRS}^{cs}+\left⌈\frac{{n}_{SRS}^{cs , max} \left({p}_{i}-1000\right)}{{N}_{ap}^{SRS}}\right⌉\right] {modn}_{SRS}^{cs , max} ,$ où
${n}_{SRS}^{cs , i}$ est un CS correspondant au port i, ${n}_{SRS}^{cs}$ est la valeur d'offset de décalage cyclique, ${n}_{SRS}^{cs , max}$ est la valeur d'offset de décalage cyclique maximale, *pᵢ* est le numéro de port, et ${N}_{ap}^{SRS}$ est le nombre de ports ; où
six ports pour le premier SRS sont divisés en deux groupes, des positions de peigne mappées par des ports dans un même groupe sont les mêmes, et des ports dans des groupes différents sont mappés à des positions de peigne différentes ; et
la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1001, 1003, 1004\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1002, 1005\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1002, 1004\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1003, 1005\right\} \\ {\overline{k}}_{TC} & sinon\end{matrix}\right. ,$ où
${k}_{TC}^{\left({p}_{i}\right)}$ est une position de peigne mappée par le port i, *k̅_{TC}* est la valeur d'offset de peigne, et *K*_{TC} est la taille de structure de peigne ; où
dans un cas où la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1001, 1003, 1004\right\} \\ {\overline{k}}_{TC} & sinon\end{matrix}\right. ,$
un port pour un troisième SRS et des ports {1002, 1005} pour le premier SRS sont mappés à une même position de peigne, et une valeur d'offset de décalage cyclique correspondant au troisième SRS est égale à une valeur obtenue en réalisant un calcul de reste sur une valeur d'offset de décalage cyclique maximale correspondant au premier SRS après avoir ajouté 1 à une valeur d'offset de décalage cyclique correspondant au premier SRS ;
ou,
dans un cas où la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1002, 1005\right\} \\ {\overline{k}}_{TC} & sinon\end{matrix}\right. ,$
un port pour un troisième SRS et des ports {1002, 1005} pour le premier SRS sont mappés à une même position de peigne, et une valeur d'offset de décalage cyclique correspondant au troisième SRS est égale à une valeur obtenue en réalisant un calcul de reste sur une valeur d'offset de décalage cyclique maximale correspondant au premier SRS après avoir ajouté 1 à une valeur d'offset de décalage cyclique correspondant au premier SRS.

7. Le procédé de mappage de port pour des signaux de référence de sondage selon la revendication 1, où, dans un cas où le nombre de ports est de 6 et la taille de structure de peigne est de 2, des ports différents pour le premier SRS utilisent des CS différents ; et
le CS correspondant à chaque port pour le premier SRS est obtenu par calcul en utilisant la formule suivante : ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] mod {n}_{SRS}^{cs , max} & si {p}_{i} ∈ \left\{1001, 1004\right\} \\ \left[{n}_{SRS}^{cs}+\left⌈\frac{{n}_{SRS}^{cs , max} \left({p}_{i}-1000\right)}{{N}_{ap}^{SRS}}\right⌉\right] mod {n}_{SRS}^{cs , max} & si {p}_{i} ∈ \left\{1002, 1005\right\} \\ \left[{n}_{SRS}^{cs}+\frac{{n}_{SRS}^{cs , max} \left({p}_{i}-1000\right)}{{N}_{ap}^{SRS}}\right] mod {n}_{SRS}^{cs , max} & sinon\end{matrix}\right. ,$ où
${n}_{SRS}^{cs , i}$ est un CS correspondant au port i, ${n}_{SRS}^{cs}$ est la valeur d'offset de décalage cyclique, ${n}_{SRS}^{cs , max}$ est la valeur d'offset de décalage cyclique maximale, *pᵢ* est le numéro de port, et ${N}_{ap}^{SRS}$ est le nombre de ports ; où
six ports pour le premier SRS sont divisés en deux groupes, des positions de peigne mappées par des ports dans un même groupe sont les mêmes, et des ports dans des groupes différents sont mappés à des positions de peigne différentes ; et
la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1002, 1004, 1005\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1003\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1002, 1004\right\} \\ {\overline{k}}_{TC} & sinon\end{matrix}\right.$ ou, ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1003, 1005\right\} \\ {\overline{k}}_{TC} & sinon\end{matrix}\right. ,$ où
${k}_{TC}^{\left({p}_{i}\right)}$ est une position de peigne mappée par le port i, *k̅_{TC}* est la valeur d'offset de peigne, et *K*_{TC} est la taille de structure de peigne ; où
dans un cas où la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1002, 1004, 1005\right\} \\ {\overline{k}}_{TC} & sinon\end{matrix},\right.$
un port pour un quatrième SRS et des ports {1000, 1003} pour le premier SRS sont mappés à une même position de peigne, et une valeur d'offset de décalage cyclique correspondant au quatrième SRS est égale à une valeur obtenue en réalisant un calcul de reste sur une valeur d'offset de décalage cyclique maximale correspondant au premier SRS après avoir ajouté 2 à une valeur d'offset de décalage cyclique correspondant au premier SRS ;
ou,
dans un cas où la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1003\right\} \\ {\overline{k}}_{TC} & sinon\end{matrix}\right. ,$
un port pour un quatrième SRS et des ports {1000, 1003} pour le premier SRS sont mappés à une même position de peigne, et une valeur d'offset de décalage cyclique correspondant au quatrième SRS est égale à une valeur obtenue en réalisant un calcul de reste sur une valeur d'offset de décalage cyclique maximale correspondant au premier SRS après avoir ajouté 2 à une valeur d'offset de décalage cyclique correspondant au premier SRS.

8. Le procédé de mappage de port pour des signaux de référence de sondage selon la revendication 1, où, dans un cas où le nombre de ports est de 6 et la taille de structure de peigne est de 2, des ports différents pour le premier SRS utilisent des CS différents ; et
le CS correspondant à chaque port pour le premier SRS est obtenu par calcul en utilisant la formule suivante : ${n}_{SRS}^{cs , i} = \left\{\begin{matrix}\left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} si {p}_{i} ∈ \left\{1001\right\} \\ \left[{n}_{SRS}^{cs}+\left⌊\frac{{n}_{SRS}^{cs , max} \left({p}_{i}-1000\right)}{{N}_{ap}^{SRS}}\right⌋\right] {modn}_{SRS}^{cs , max} si {p}_{i} ∈ \left\{1002, 1004, 1005\right\} \\ \left[{n}_{SRS}^{cs}+\frac{{n}_{SRS}^{cs , max} \left({p}_{i}-1000\right)}{{N}_{ap}^{SRS}}\right] {modn}_{SRS}^{cs , max} sinon\end{matrix},\right.$ où
${n}_{SRS}^{cs , i}$ est un CS correspondant au port i, ${n}_{SRS}^{cs}$ est la valeur d'offset de décalage cyclique, ${n}_{SRS}^{cs , max}$ est la valeur d'offset de décalage cyclique maximale, *pᵢ* est le numéro de port, et ${N}_{ap}^{SRS}$ est le nombre de ports ; où
six ports pour le premier SRS sont divisés en deux groupes, des positions de peigne mappées par des ports dans un même groupe sont les mêmes, et des ports dans des groupes différents sont mappés à des positions de peigne différentes ; et
la position de peigne mappée par chaque port pour le premier SRS est obtenue par calcul en utilisant la formule suivante : ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1000, 1002, 1004\right\} \\ {\overline{k}}_{TC} & sinon\end{matrix}\right.$ ou ${k}_{TC}^{\left({p}_{i}\right)} = \left\{\begin{matrix}\left({\overline{k}}_{TC}+{K}_{TC}/2\right) mod {K}_{TC} & si {p}_{i} ∈ \left\{1001, 1003, 1005\right\} \\ {\overline{k}}_{TC} & sinon\end{matrix}\right. ,$ où
${k}_{TC}^{\left({p}_{i}\right)}$ est une position de peigne mappée par le port i, *k̅_{TC}* est la valeur d'offset de peigne, et *K*_{TC} est la taille de structure de peigne.

9. Un terminal (500), comprenant un processeur (510) et une mémoire (509), où un programme ou des instructions sont stockés dans la mémoire (509) et exécutables sur le processeur (510), et lorsque le programme ou les instructions sont exécutés par le processeur (510), le procédé de mappage de port pour des signaux de référence de sondage selon l'une quelconque des revendications 1 à 8 est mis en œuvre.

10. Un support de stockage lisible, le support de stockage lisible stockant un programme ou des instructions, et lorsque le programme ou les instructions sont exécutés par un processeur (510), le procédé de mappage de port pour des signaux de référence de sondage selon l'une quelconque des revendications 1 à 8 est mis en œuvre.
